(19) Europäisches Patentamt
European Patent Office
Office européen des brevets

(11) **EP 4 578 645 A1**

(12) **EUROPEAN PATENT APPLICATION**
published in accordance with Art. 153(4) EPC

(43) Date of publication:
**02.07.2025 Bulletin 2025/27**

(21) Application number: 23857352.1

(22) Date of filing: **22.08.2023**

(51) International Patent Classification (IPC):
**B32B 27/00** $^{(2006.01)}$    **B32B 7/06** $^{(2019.01)}$

(52) Cooperative Patent Classification (CPC):
**B32B 7/06; B32B 27/00**

(86) International application number:
**PCT/JP2023/030213**

(87) International publication number:
**WO 2024/043243 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **23.08.2022   JP 2022132784**

(71) Applicant: **Nippon Paint Automotive Coatings Co., Ltd.**
**Hirakata-shi, Osaka 573-1153 (JP)**

(72) Inventors:
• **MIYATA Ryohei**
  **Hirakata-shi, Osaka 573-1153 (JP)**
• **YAMAZAKI Tetsuya**
  **Hirakata-shi, Osaka 573-1153 (JP)**
• **NAKAMURA Ikufumi**
  **Hirakata-shi, Osaka 573-1153 (JP)**
• **YAMAGUCHI Mirei**
  **Hirakata-shi, Osaka 573-1153 (JP)**
• **HOSOKAWA Takeki**
  **Hirakata-shi, Osaka 573-1153 (JP)**

(74) Representative: **HGF**
**HGF Limited**
**1 City Walk**
**Leeds LS11 9DX (GB)**

(54) **MULTILAYER FILM AND ARTICLE**

(57)    Provided is a laminate film that provides an optical property according to needs regardless of luster and surface roughness of an adherend and that has excellent durability even under severe conditions with regard to humidity resistance of an adherend. The laminate film includes, in order, a protective film, a coating layer, a resin substrate, and an adhesive layer. The protective film and the coating layer are adjacent to each other. When the protective film is peeled from the laminate film at a specific rate to obtain a laminate film L, surface roughness Rac of a surface at an opposite side of the coating layer of the laminate film L relative to the resin substrate and surface roughness Rap at a coating layer-side of the protective film that has been peeled off satisfy a specific equation, surface free energy γac of the surface at the opposite side of the coating layer of the laminate film L relative to the resin substrate and surface free energy γap at the coating layer-side of the protective film that has been peeled off satisfy a specific equation, Martens hardness of the coating layer of the laminate film L satisfies a specific equation, 60° gloss G(IL) of the laminate film L and 60° gloss G(IC) of the laminate film L in a composite of the laminate film L and an adherend satisfy a specific equation, and 60° gloss G(A) of the laminate film L in the composite after damp heat testing and the 60° gloss G(IC) satisfy a specific equation.

FIG. 1

**Description**

TECHNICAL FIELD

The present disclosure relates to a laminate film and an article.

BACKGROUND

Laminate films are used in order to provide surface protection and impart design properties to articles that are used outdoors, etc. (for example, refer to Patent Literature (PTL) 1 to 4).

CITATION LIST

Patent Literature

PTL 1: JP2018-053193A
PTL 2: JP5426159B2
PTL 3: WO2016/010041A1
PTL 4: WO2017/047600A1

SUMMARY

(Technical Problem)

However, an article to which a resin sheet or laminate film has been affixed (hereinafter, referred to as an adherend) experiences changes of surface shape and changes of optical properties over time.
For example, an adherend that initially has high luster may suffer from decreased luster, increased haze, and decreased visibility, whereas an adherend that initially has low luster in order to protect privacy or suppress reflection of sunlight and reduce glare of the surroundings may suffer from increased luster and decreased haze, and thus deterioration of these luster characteristics has been an issue.
Moreover, when a laminate film is affixed to an article that has deteriorated over time, the laminate film is affected by the surface shape of the article, which makes it difficult to impart optical properties ranging from high luster to low luster.
Accordingly, one object of the present disclosure is to provide a laminate film that provides an optical property according to needs regardless of luster and surface roughness of an adherend and that has excellent durability even under severe conditions with regard to humidity resistance of an adherend.
Another object of the present disclosure is to provide an article that incorporates such a laminate film.

(Solution to Problem)

The present disclosure provides the following configurations in order to solve the problems described above.

[1] A laminate film comprising, in order, a protective film, a coating layer, a resin substrate, and an adhesive layer, wherein

the protective film and the coating layer are adjacent to each other,
when a laminate film not including the protective film that results from peeling of the protective film from the laminate film at a rate of 5.0 mm/s is taken to be a laminate film L, surface roughness Rac of a surface at an opposite side of the coating layer of the laminate film L relative to the resin substrate and surface roughness Rap at a coating layer-side of the protective film that has been peeled off satisfy equation 1:

$$50.0 \leq (Rac/Rap) \times 100 \leq 210.0 \cdots \text{equation 1}$$

surface free energy γac of the surface at the opposite side of the coating layer of the laminate film L relative to the resin substrate and surface free energy γap at the coating layer-side of the protective film that has been peeled off satisfy equation 2:

$$50.0 \leq (\gamma ac/\gamma ap) \times 100 \leq 110.0 \cdots \text{equation 2}$$

60° gloss G(IL) of the laminate film L and 60° gloss G(IC) of the laminate film L in a composite of the laminate film L and an adherend resulting from affixing of the laminate film L to the adherend satisfy equation 3:

$$85.0 \leq (G(IC)/G(IL)) \times 100 \leq 110.0 \cdots \text{equation 3}$$

Martens hardness of the coating layer of the laminate film L satisfies equation 4:

$$2 \text{ N/mm2} \leq HM(L) \leq 50 \text{ N/mm2} \cdots \text{equation 4}$$

and 60° gloss G(A) of the laminate film L in the composite after damp heat testing at a humidity of 85% and a temperature of 85°C and the 60° gloss G(IC) of the laminate film L in the composite before damp heat testing at a humidity of 85% and a temperature of 85°C satisfy equation 5:

$$70.0 \leq (G(A)/G(IC)) \times 100 \leq 120.0 \cdots \text{equation 5.}$$

[2] The laminate film according to [1], wherein the coating layer is formed of one or more layers, and the laminate film has a stacking order of protective film/clear layer/design layer/resin substrate/adhesive layer.

[3] The laminate film according to [1] or [2], wherein the laminate film has a configuration including a design layer between the resin substrate and the adhesive layer and has a stacking order of protective film/coating layer/resin substrate/design layer/adhesive layer.

[4] The laminate film according to any one of [1] to [3], wherein Tg of the coating layer in the laminate film L after curing is 25.0°C to 120.0°C.

[5] The laminate film according to any one of [1] to [4], wherein the laminate film L has an extensibility of 50% to 300%.

[6] The laminate film according to any one of [1] to [5], wherein the coating layer is formed of one or more selected from the group consisting of an acrylic resin, a polycarbonate polyol, a fluororesin, and a silicone resin.

[7] An article comprising:

an adherend; and
a laminate film L resulting from peeling of the protective film from the laminate film according to any one of [1] to [6], wherein
the adhesive layer of the laminate film L is in contact with the adherend.

(Advantageous Effect)

According to the present disclosure, it is possible to provide a laminate film that provides optical properties according to needs regardless of luster and surface roughness of an adherend and that maintains the durability of the article.

BRIEF DESCRIPTION OF THE DRAWINGS

In the accompanying drawings:

FIG. 1 is a schematic view illustrating an example of a layer configuration of a laminate film of the present disclosure;
FIG. 2 is a schematic view illustrating an example of a layer configuration of a laminate film L;
FIG. 3 is a schematic view illustrating an example of a layer configuration of a composite;
FIG. 4 is a schematic view illustrating an example of a layer configuration of a laminate film of the present disclosure; and
FIG. 5 is a schematic view illustrating an example of a layer configuration of a laminate film of the present disclosure.

DETAILED DESCRIPTION

The following describes embodiments of the present disclosure. The following description is intended for illustrative purposes only, and is not intended to limit the scope of the present disclosure in any way.

Two or more of the embodiments can be freely combined.

Numerical ranges in the present specification are intended to include the upper limit and the lower limit of that range, unless otherwise specified. For example, 60 mass% to 99 mass% means not less than 60 mass% and not more than 99 mass%.

The drawings are drawn such as to prioritize understanding, and the dimensions, ratios, etc. of elements of configuration are not necessarily accurate.

(Laminate film)

A laminate film according to the present disclosure includes, in order, a protective film, a coating layer, a resin substrate, and an adhesive layer, wherein

the protective film and the coating layer are adjacent to each other,
when a laminate film not including the protective film that results from peeling of the protective film from the laminate film at a rate of 5.0 mm/s is taken to be a laminate film L, surface roughness Rac of a surface at an opposite side of the coating layer of the laminate film L relative to the resin substrate and surface roughness Rap at a coating layer-side of the protective film that has been peeled off satisfy equation 1:

$$70.0 \leq (\mathrm{Rac/Rap}) \times 100 \leq 210.0 \cdots \text{ equation } 1$$

surface free energy γac of the surface at the opposite side of the coating layer of the laminate film L relative to the resin substrate and surface free energy γap at the coating layer-side of the protective film that has been peeled off satisfy equation 2:

$$50.0 \leq (\gamma\mathrm{ac}/\gamma\mathrm{ap}) \times 100 \leq 110.0 \cdots \text{ equation } 2$$

60° gloss G(IL) of the laminate film L and 60° gloss G(IC) of the laminate film L in a composite of the laminate film L and an adherend resulting from affixing of the laminate film L to the adherend satisfy equation 3:

$$85.0 \leq (\mathrm{G(IC)/G(IL)}) \times 100 \leq 110.0 \cdots \text{ equation } 3$$

Martens hardness of the coating layer of the laminate film L satisfies equation 4:

$$2 \text{ N/mm2} \leq \mathrm{HM(L)} \leq 50 \text{ N/mm2} \cdots \text{ equation } 4$$

and 60° gloss G(A) of the laminate film L in the composite after damp heat testing at a humidity of 85% and a temperature of 85°C and the 60° gloss G(IC) of the laminate film L in the composite before damp heat testing at a humidity of 85% and a temperature of 85°C satisfy equation 5:

$$70.0 \leq (\mathrm{G(A)/G(IC)}) \times 100 \leq 120.0 \cdots \text{ equation } 5.$$

The adhesive layer fills in sections where degradation has occurred and thus restores transparency, and selection of a coating layer that enables transfer/retention of the shape of the protective film makes it possible to impart an optical property according to needs. Not only is it possible to adjust external appearance and luster (60° gloss), it is also possible to restore durability of an adherend in terms of hardness, damp heat resistance, and so forth.

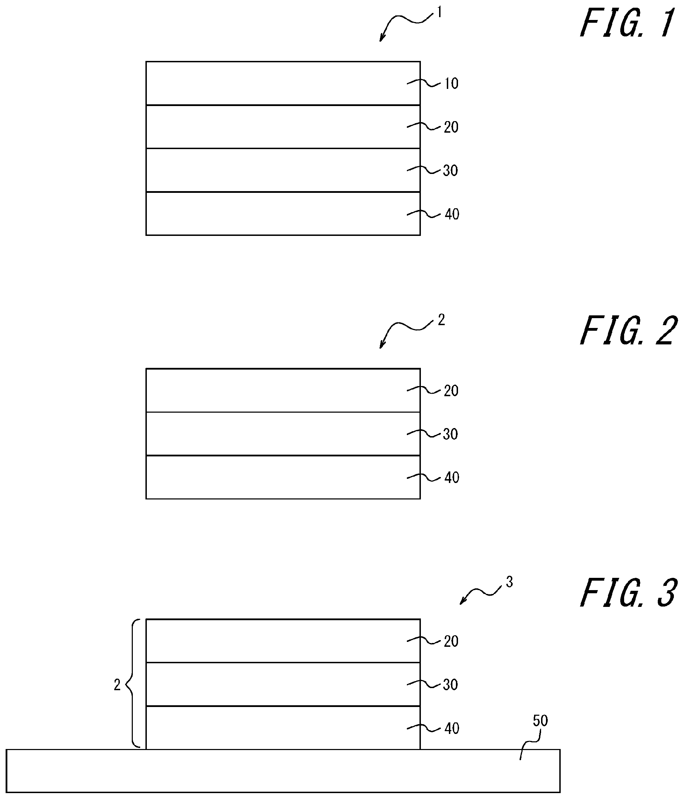

FIG. 1 is a schematic view illustrating an example of a layer configuration of the laminate film of the present disclosure. In the example illustrated in FIG. 1, a laminate film 1 includes a protective film 10, a coating layer 20, a resin substrate 30, and an adhesive layer 40 in order.

FIG. 2 is a schematic view illustrating an example of a layer configuration of the laminate film L. In the example illustrated in FIG. 2, a laminate film L 2 includes a coating layer 20, a resin substrate 30, and an adhesive layer 40 in order.

FIG. 3 is a schematic view illustrating an example of a layer configuration of the composite. In the example illustrated in FIG. 3, a composite 3 includes a coating layer 20, a resin substrate 30, an adhesive layer 40, and an adherend 50 in order.

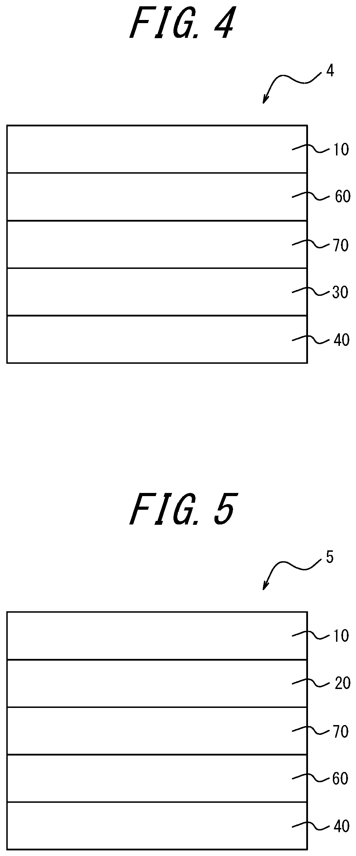

FIG. 4 is a schematic view illustrating an example of a layer configuration of the laminate film of the present disclosure. In the example illustrated in FIG. 4, a laminate film 4 includes a protective film 10, a clear layer 60, a design layer 70, a resin substrate 30, and an adhesive layer 40 in order. Configurations of the laminate film L and composite in this case are the same as with the laminate film 1 with the exception that the coating layer is formed of two or more layers.

FIG. 5 is a schematic view illustrating an example of a layer configuration of the laminate film of the present disclosure. In the example illustrated in FIG. 5, a laminate film 5 includes a protective film 10, a coating layer 20, a resin substrate 30, a design layer 70, and an adhesive layer 40 in order. Configurations of the laminate film L and composite in this case are the same as with the laminate film 1 with the exception of the presence of a design layer.

(Protective film)

A film that forms the protective film may be a conventional film that is publicly known such as a biaxially stretched film (biaxially stretched polyester film, biaxially stretched polypropylene film, etc.), a soft vinyl chloride film, an unstretched polypropylene film, an unstretched polyester film, a polyolefin film, a modified polyolefin film, a polystyrene resin film, a polyurethane film, a urethane nylon film, a polyamide film, a polymethylpentene film, a polycarbonate film, an acrylic resin film, or a fluorofilm, for example, without any specific limitations. Of these examples, a film that is formed of a polyester and/or polyolefin is preferable. In particular, in terms of energy efficiency and low temperature processability, a biaxially stretched polyester film is more preferable in a case in which formability (stretchability) is not required due to adoption for a flat substrate, whereas an unstretched polyester film is more preferable in a case in which formability (stretchability) is required due to adoption for an object having a three dimensional shape. The thickness of the protective film is preferably 0.01 mm to 0.5 mm, and more preferably 0.02 mm to 0.3 mm. A thickness deviating from these ranges is undesirable in terms of action as a carrier film and also financially due to the need for greater energy in order to cure a clear layer coating film during curing with activating energy rays.

A protective film that has an uneven shape at the surface thereof may be used as the protective film in the present disclosure. The use of such a film is advantageous in terms that the uneven shape of the protective film is transferred onto the coating, which makes it possible to obtain a design having a matte texture based on this unevenness texture. No specific limitations are placed on the uneven shape so long as it is of an extent such as to be visually recognizable and be capable of imparting a matte texture to the design.

The protective film may have a release agent applied onto the surface thereof. For example, a release agent may be applied onto either or both of a surface at a clear layer-side of the protective film and a surface at an opposite side of the protective film relative to the clear layer-side.

The surface roughness Rac of a laminate film resulting from peeling of the protective film from the laminate film at a rate of 5.0 mm/s and the surface roughness Rap at the peeled side of the protective film preferably satisfy the following equation (1).

$$50.0 \leq (\text{Rac}/\text{Rap}) \times 100 \leq 210.0 \cdots (1)$$

Satisfaction of equation (1) means that an uneven shape of the protective film can be suitably transferred and that a desired optical property can be obtained.

The coating layer may be two layers, wherein one of the layers is a clear layer and the other of the layers is a design layer.

In a case in which the laminate film includes a design layer, it is preferable that the laminate film has a configuration with a stacking order of protective film/clear layer/design layer/resin substrate/adhesive layer or a configuration with a stacking order of protective film/coating layer/resin substrate/design layer/adhesive layer.

A configuration in which a design layer of the laminate film is present between the resin substrate and the adhesive layer is preferable from a viewpoint of weatherability because the clear layer and the resin substrate are present further toward a surface side than the design layer. This configuration is also preferable in terms of orientation of the design layer because the design layer is coated onto the resin substrate, which is comparatively smooth, and because design properties are visible from the clear layer-side.

(Coating layer: Clear layer in case of two-layer configuration)

The laminate film of the present disclosure is a laminate film that includes a coating layer. The coating layer that is used in the present disclosure is preferably a layer that is formed from a thermoset coating composition or an activating energy ray-cured coating composition. No specific limitations are placed on the specific chemical composition of the coating layer so long as it does not impair physical properties as a laminate film.

The coating layer is required to have performance in terms of weatherability, water resistance, impact resistance, and so forth since it constitutes an outermost layer once the laminate film has been affixed to an article. Consequently, the coating layer is preferably a layer that is formed using a thermoset coating composition or an activating energy ray-cured coating composition that excels in terms of these aspects of performance.

Conventional compositions that are publicly known can be used as the aforementioned thermoset coating composition and activating energy ray-cured coating composition without any specific limitations. Moreover, the composition may be an aqueous composition or a solvent-based composition, and may be a one-component type composition or a two-component type composition.

The thermoset coating composition may, for example, be a two-component type coating composition composed of a main ingredient that contains a polyol and a curing catalyst and a curing agent that contains an isocyanurate compound. Mixing of the main ingredient and the curing agent causes reaction of the polyol with the isocyanurate compound and yields a cured coating film. The main ingredient and/or the curing agent may each be subjected to heating and/or vacuum degassing prior to mixing. This reduces the amount of water that is contained in the two-component type coating composition obtained through mixing of the main ingredient and the curing agent and makes it easy to improve the external appearance of an obtained coating film.

(Main ingredient)

A resin component of the main ingredient may be an acrylic resin, an alkyd resin, an epoxy resin, a urethane resin, a fluororesin, a polyether diol, a polyester diol, a polycarbonate diol, a caprolactone diol, a polyether polyol, a polyester polyol, a polycarbonate polyol, a caprolactone polyol, or the like, but is not limited to these examples.

An acrylic resin is preferable as the resin component of the main ingredient. Moreover, it is preferable that a mixture of a resin component and an isocyanate compound is used as a coating layer coating material. With such a mixture, adhesiveness is not displayed at around room temperature, but heating of the coating layer increases plasticity of the resin component, facilitates deformation of the resin component, and causes the display of a certain degree of adhesiveness.

The following describes each component in detail.

(Acrylic resin)

The weight-average molecular weight of the acrylic resin may be 1,000 to 200,000, and preferably 3,000 to 100,000, for example.

The glass-transition temperature (Tg) of the acrylic resin in the coating layer coating material may be 0°C to 100°C, and preferably 10°C to 50°C, for example. In one embodiment, Tg of the acrylic resin in the coating layer coating material is 20°C or higher, 30°C or higher, 40°C or higher, 50°C or higher, 60°C or higher, or 70°C or higher. In another embodiment, Tg of the acrylic resin in the coating layer coating material is 80°C or lower, 70°C or lower, 60°C or lower, 50°C or lower, 40°C or lower, or 30°C or lower.

The proportion constituted by the acrylic resin in the coating layer coating material may be 50 mass% or more, and preferably 60 mass% to 99 mass%, for example. In one embodiment, the proportion constituted by the acrylic resin in the coating layer coating material is 50 mass% or more, 60 mass% or more, 70 mass% or more, 80 mass% or more, or 90 mass% or more. In another embodiment, the proportion constituted by the acrylic resin in the coating layer coating material is 99 mass% or less, 90 mass% or less, 80 mass% or less, 70 mass% or less, or 65 mass% or less.

(Polyol)

The polyol is a coating film-forming resin. The polyol reacts with the curing agent upon heating, for example, and thereby forms a cured coating film. The polyol includes at least two hydroxy groups per one molecule. This tends to increase the hardness of an obtained coating film. One polyol may be used individually, or two or more polyols may be used in combination.

The main ingredient preferably includes a polyol (A1) that includes at least three hydroxy groups per one molecule and a polyol (A2) that includes two hydroxy groups per one molecule. No specific limitations are placed on the proportions of the polyol (A1) and the polyol (A2). The proportion constituted by the polyol (A2) may be 50 mass% or less, may be 40 mass% or less, or may be 30 mass% or less of the total of the polyol (A1) and the polyol (A2).

The polyol has a hydroxyl value of not less than 300 mg KOH/g and not more than 1,000 mg KOH/g. Through the hydroxyl value of the polyol being within the range set forth above, there is a higher rate of reaction between the polyol and the isocyanate compound upon mixing of the main ingredient and the curing agent. Consequently, a coated article can be promptly removed from a mold, and productivity improves. Moreover, since a certain amount of reaction heat is generated during the reaction, close adherence of a coating film, particularly with respect to a resin substrate, tends to improve.

In a case in which two or more polyols are included, the apparent hydroxyl value calculated based on the hydroxyl values and the mass proportions of the polyols should be not less than 300 mg KOH/g and not more than 1,000 mg KOH/g. In other words, the main ingredient may contain a polyol having a hydroxyl value of less than 300 mg KOH/g and/or a polyol having a hydroxyl value of more than 1,000 mg KOH/g.

The hydroxyl value of the polyol (inclusive of the apparent hydroxyl value; same applies below) is more preferably 350 mg KOH/g or more, and even more preferably 500 mg KOH/g or more. The hydroxyl value of the polyol is more preferably 800 mg KOH/g or less, and even more preferably 700 mg KOH/g or less.

No specific limitations are placed on the type of polyol. For example, the polyol may be a polyester polyol, a polyether polyol, a polycarbonate polyol, a polyacrylate polyol, or a polyhydric alcohol. One of these polyols may be used individually, or two or more of these polyols may be used in combination. Of these examples, it is preferable that the polyol includes one or more selected from the group consisting of a polyester polyol, a polyether polyol, and a polycarbonate polyol.

The polyester polyol preferably has a branched structure. A polyester polyol having a branched structure is produced by, for example, reacting two or more polybasic carboxylic acids with a polyhydric alcohol compound having a valence of 3 or higher and then repeating this reaction as necessary.

Examples of commercially available polyester polyols include Desmophen VPLS2249/1 (produced by Sumika Covestro Urethane Co., Ltd.), Desmophen 800 (produced by Sumika Covestro Urethane Co., Ltd.), Desmophen XP2488 (produced by Sumika Covestro Urethane Co., Ltd.), Kuraray Polyol P-510 (produced by Kuraray Co., Ltd.), and Kuraray Polyol F-510 (produced by Kuraray Co., Ltd.).

The polyether polyol may be polyethylene glycol, polypropylene glycol, polytetramethylene glycol, or a blocked product of any thereof. The polyether polyol may be produced through addition of ethylene oxide and/or propylene oxide to a polyhydric alcohol compound. This procedure enables production of a polyether polyol in which the number of OH functional groups per one molecule is 2, 3, or more.

Examples of commercially available polyether polyols include the SANNIX series produced by Sanyo Chemical Industries, Ltd. Specifically, SANNIX GP-250, SANNIX GP-400, SANNIX PP-200, SANNIX GP-600, or the like may be used.

The polycarbonate polyol can be produced by reacting dimethyl carbonate with a polyhydric polyol, for example.

Examples of commercially available polycarbonate polyols include DURANOL T5650E (produced by Asahi Kasei Corporation), C-590 (produced by Kuraray Co., Ltd.), and ETERNACOLL PH-50 (produced by Ube Industries, Ltd.).

The polyhydric alcohol may be ethylene glycol, glycerin, trimethylolpropane, propylene glycol, tetramethylene glycol, pentaerythritol, or the like, for example.

No specific limitations are placed on the weight-average molecular weight (Mw) of the polyol. Mw of the polyol should be set as appropriate depending on the hydroxyl value, etc.

The main ingredient may contain a polyol having an average number of hydroxy groups of less than 3. The main ingredient may contain a coating film-forming resin other than the polyol. The coating film-forming resin may be an acrylic resin, a polyester resin, an alkyd resin, a polyether resin, a polyolefin resin, a polyurethane resin, a polycarbonate resin, a melamine resin, an epoxy resin, or a carbodiimide resin, for example. One other coating film-forming resin may be used individually, or two or more other coating film-forming resins may be used in combination.

(Curing catalyst)

The curing catalyst promotes a curing reaction. No specific limitations are placed on the curing catalyst. From a viewpoint of reaction promoting effect, the curing catalyst is preferably at least one organometallic catalyst including a metal element selected from the group consisting of Bi, Zn, Al, Zr, and Sn, for example. In particular, at least one organometallic catalyst including a metal element selected from the group consisting of Bi, Zn, Al, and Zr is preferable.

The organometallic catalyst including Bi may be a bismuth carboxylate or salt thereof, for example. The organometallic catalyst including Zn may be a zinc complex catalyst, for example. The organometallic catalyst including Al may be an aluminum complex catalyst, for example. The organometallic catalyst including Zr may be a zirconium chelate catalyst, for example. The organometallic catalyst including Sn may be a dialkyltin dicarboxylate such as dibutyltin dilaurate, dioctyltin dilaurate, or dibutyltin diacetate; a tin oxide compound such as dibutyltin oxide; or a tin carboxylate salt such as tin 2-ethylhexanoate.

Examples of commercially available organometallic catalysts including Bi include K-KAT 348 (produced by Kusumoto Chemicals, Ltd.) and K-KAT XK-640 (produced by Kusumoto Chemicals, Ltd.). Examples of commercially available organometallic catalysts including Zr include K-KAT 4205, K-KAT XC-9213, K-KAT XC-A209, and K-KAT 6212 (all produced by Kusumoto Chemicals, Ltd.). Examples of commercially available organometallic catalysts including Al include K-KAT 5218 (produced by Kusumoto Chemicals, Ltd.). Examples of commercially available organometallic catalysts including Zn include K-KAT XK-314, K-KAT XK-635, K-KAT XK-639, and K-KAT XK-620 (all produced by Kusumoto Chemicals, Ltd.). Examples of commercially available organometallic catalysts including Sn include TVS TIN LAU (produced by Nitto Kasei Co., Ltd.)

The content of the curing catalyst may be not less than 0.25 parts by mass and not more than 10 parts by mass relative to 100 parts by mass of the coating film-forming resin, for example. This causes quick progression of the curing reaction of the coating film-forming resin. Consequently, a coating film having excellent external appearance and physical properties is obtained through layer formation by coating. The content of the curing catalyst is more preferably 0.5 parts by mass or more relative to 100 parts by mass of the coating film-forming resin. The content of the curing catalyst is more preferably 7 parts by mass or less relative to 100 parts by mass of the coating film-forming resin.

(Curing agent)

The curing agent causes cross-linking of the acrylic resin and the coating film-forming resin such as the polyol and improves corrosion resistance and durability of an obtained coating film.

The curing agent includes an isocyanurate compound. The isocyanurate compound is a trimer of an isocyanate compound and has a ring structure.

The isocyanate compound may be an isocyanate compound that is publicly known as a curing agent of a two-component reaction-type composition. For example, the isocyanate compound may be an aromatic diisocyanate such as tolylene diisocyanate (TDI), 4,4'-diphenylmethane diisocyanate (MDI), xylylene diisocyanate (XDI), or m-xylylene diisocyanate (MXDI); an aliphatic diisocyanate such as hexamethylene diisocyanate (HDI), tetramethylene diisocyanate, 2-methyl-pentane-1,5-diisocyanate, 3-methylpentane-1,5-diisocyanate, lysine diisocyanate, or trioxyethylene diisocyanate; or an alicyclic diisocyanate such as isophorone diisocyanate (IPDI), cyclohexyl diisocyanate, 4,4'-dicyclohexylmethane diisocyanate, norbornane diisocyanate, hydrogenated tolylene diisocyanate, hydrogenated xylene diisocyanate, or hydrogenated tetramethylxylene diisocyanate. One of these isocyanate compounds may be used individually, or two or more of these isocyanate compounds may be used in combination.

Of these isocyanate compounds, aliphatic diisocyanates are preferable in terms of having comparatively low viscosity, and HDI is more preferable. Trimers of these isocyanates have particularly high reactivity with a polyol. Therefore, they can more suitably be used in a method of forming the coating layer by coating.

A ratio of isocyanate group equivalents of the isocyanate compound and hydroxy group equivalents of the polyol (NCO equivalents/OH equivalents) is preferably not less than 0.5/1 and not more than 2/1, and more preferably not less than 0.9/1 and not more than 1.2/1. When the ratio of equivalents is within any of the ranges set forth above, this results in high curability and, in particular, is suitable for use in coating layer formation by coating.

The curing agent may contain another curing agent besides the isocyanurate compound. The other curing agent may be an amino resin, a monomer or dimer of any of the previously described isocyanate compounds, a biuret product of any of the previously described isocyanate compounds, a blocked product of any of the previously described isocyanate compounds, an epoxy compound, an aziridine compound, a carbodiimide compound, or an oxazoline compound, for example. One of these other curing agents may be used individually, or two or more of these other curing agents may be used in combination.

The content of the curing agent may be not less than 35 mass% and not more than 90 mass% of resin solid content in the coating material composition, for example. The above-described content of the curing agent is preferably 45 mass% or more, and more preferably 55 mass% or more. The above-described content of the curing agent is preferably 85 mass% or less, and more preferably 70 mass% or less.

(Solvent)

The content of a solvent is 30 mass% or less. According to the present embodiment, aggregation of glitter particles is inhibited even in a high-viscosity composition that only contains a small amount of a solvent in this manner. Consequently, it is possible to form a coating film having a glitter feel by coating. The content of the solvent is preferably 20 mass% or less, more preferably 10 mass% or less, and may be 0%.

No specific limitations are placed on the solvent. The solvent is normally an organic solvent. The organic solvent may be an ester solvent such as ethyl acetate, butyl acetate, isopropyl acetate, ethylene glycol monoethyl ether acetate, propylene glycol monomethyl ether acetate, or propylene glycol monoethyl ether acetate; an ether solvent such as propylene glycol monomethyl ether, ethylene glycol monomethyl ether, methylmethoxybutanol, ethoxypropanol, ethylene glycol isopropyl ether, ethylene glycol t-butyl ether, ethylene glycol monoethyl ether, ethylene glycol monobutyl ether, methoxybutanol, or propylene glycol monobutyl ether; an alcohol solvent such as methanol, ethanol, butanol, or propanol; a ketone solvent such as acetone, methyl ethyl ketone, or methyl isobutyl ketone; an aliphatic hydrocarbon solvent such as SWASOL, ShellSol, or mineral spirit; or an aromatic solvent such as xylene, toluene, Solvesso-100 (S-100), or Solvesso-150 (S-150), for example. One of these organic solvents may be used individually, or two or more of these organic solvents may be used in combination.

(Others)

The two-component type coating composition may contain other components as necessary. For example, additives that can typically be used in the fields of coating and coating materials can be used as other components. Specific examples include light stabilizers, ultraviolet absorbers, various pigments, surface conditioners, viscosity modifiers, antioxidants, ultraviolet blockers, defoamers, catalyst aids, rust inhibitors, anti-settling agents, and dispersants. These additives may be added to the main ingredient or may be added to the curing agent. The amounts of additives can be appropriately set as necessary without any specific limitations.

The activating energy ray-cured coating composition is a monomer, oligomer, or polymer that can be cross-linked and cured through radiation. In the present disclosure, it is preferable that a polyfunctional (meth)acrylate compound such as a polyfunctional (meth)acrylate monomer, a polyfunctional (meth)acrylate oligomer, or a polyfunctional (meth)acrylate polymer is contained as an activating energy ray-cured resin from a viewpoint that crosslink density after curing can be increased, an effect of improving surface hardness can be increased, and an effect of improving transparency can be increased. Note that the term "(meth)acrylate" as used here indicates acrylate and/or methacrylate. Also note that the term "polyfunctional (meth)acrylate compound" as used in the present specification refers to a compound that does not have a urethane structure and is not inclusive of urethane acrylates such as described below. The activating energy ray-cured resin may include a monofunctional (meth)acrylate compound in addition to the aforementioned polyfunctional (meth) acrylate compound.

The activating energy ray-cured resin that can be contained in the activating energy ray-cured coating composition may include a urethane acrylate, for example. In a given embodiment, the activating energy ray-cured coating composition contains a polyfunctional (meth)acrylate compound and a urethane acrylate.

A urethane acrylate monomer, oligomer, or polymer, or a combination of two or more thereof can be used as the urethane acrylate. Examples include urethane acrylate, urethane methacrylate, aliphatic urethane acrylate, aliphatic urethane methacrylate, aromatic urethane acrylate, aromatic urethane methacrylate, and so forth. In particular, a polyfunctional urethane acrylate oligomer having a molecular weight of approximately 1,000 to 10,000 can preferably be used.

The activating energy ray-cured coating composition in the present disclosure may, for example, contain a polyfunctional urethane acrylate that includes two or more acrylate groups and that has an ester skeleton. The inclusion of this polyfunctional urethane acrylate makes it possible for the obtained coating layer to display sufficient close adherence to a transparent polymeric substrate. Moreover, when the refractive index of a formed hard coating layer is within the specific range set forth above, interference fringes can be prevented. The number of acrylate groups is 2 or more, and is preferably 2 to 4. Reactivity may decrease and close adherence and hardness may also decrease with a monofunctional urethane acrylate due to the size of molecular weight. Reduction of close adherence due to contraction during curing is a concern when the number of functional groups is excessive.

The polyfunctional (meth)acrylate (compound) may be obtained by, for example, reacting a polycarbonate diol (a) (hereinafter, also referred to as component (a)), a (meth)acrylate compound (b) including two hydroxy groups and two ethylenically unsaturated groups in a molecule (hereinafter, also referred to as component (b)), and a polyisocyanate (hereinafter, also referred to as component (c)).

The polycarbonate diol (a) is a diol including linear and/or branched chains having a carbon number of 2 to 10 that is represented by HO-(R-O-C(=O)-O)-R'OH (in the formula, R and R' are linear or branched alkylene groups having a carbon number of 2 to 10 that are the same as or different from each other; note that the carbon number is the total number for R and R'). Specific examples of R and R' in the preceding formula include an ethylene group, a propylene group, a butylene group, a pentylene group, a hexylene group, a heptylene group, an octylene group, a cyclohexylene group, a neopentylene group, a nonylene group, and a 2-methyl-1,8-octylene group. A combination of two or more of these groups may be adopted. In particular, a polycarbonate diol that is synthesized from 1,5-pentanediol and/or 1,6-hexanediol is preferable. Moreover, one compound may be used individually as the component (a), or two or more compounds may be used in combination as the component (a). One of these polyfunctional acrylates may be used individually, or two or more of these polyfunctional acrylates may be used as a mixture.

Specific examples of the (meth)acrylate compound (b) including two hydroxy groups and two ethylenically unsaturated groups in a molecule include a (meth)acrylic acid addition product of propylene glycol diglycidyl ether, a (meth) acrylic acid addition product of 1,6-hexanediol diglycidyl ether, a (meth)acrylic acid addition product of ethylene glycol diglycidyl ether, a (meth)acrylic acid addition product of 1,4-butanediol diglycidyl ether, a (meth)acrylic acid addition product of 1,5-pentanediol diglycidyl ether, a (meth)acrylic acid addition product of 1,7-heptanediol diglycidyl ether, and a (meth)acrylic acid addition product of 1,8-octanediol diglycidyl ether. Other examples include a (meth)acrylic acid addition product of neopentyl glycol diglycidyl ether, a (meth)acrylic acid addition product of bisphenol A diglycidyl ether, and a (meth)acrylic acid addition product of hydrogenated bisphenol A diglycidyl ether. Of these examples, an acrylic acid addition product of propylene glycol diglycidyl ether and an acrylic acid addition product of 1,6-hexanediol diglycidyl ether are preferable.

Although no specific limitations are placed on the polyisocyanate (c), a diisocyanate compound such as an aliphatic diisocyanate compound, an alicyclic diisocyanate compound, or an aromatic diisocyanate compound can preferably be used, for example. Specifically, tolylene diisocyanate, 4,4'-diphenylmethane diisocyanate, xylylene diisocyanate, xylene diisocyanate, hexamethylene diisocyanate, lysine diisocyanate, 4,4'-methylene bis(cyclohexyl isocyanate), methylcyclohexane-2,4 (or 2,6)-diisocyanate, 1,3-(isocyanatomethyl)cyclohexane, isophorone diisocyanate, trimethylhexamethylene diisocyanate, dimer acid diisocyanate, dianisidine diisocyanate, phenyl diisocyanate, halogenated phenyl diisocyanate, methylene diisocyanate, ethylene diisocyanate, butylene diisocyanate, propylene diisocyanate, octadecylene diisocyanate, 1,5-naphthalene diisocyanate, polymethylene polyphenylene diisocyanate, triphenylmethane triisocyanate, naphthalene diisocyanate, a polymer of tolylene diisocyanate, a polymer of diphenylmethane diisocyanate, a polymer of hexamethylene diisocyanate, 3-phenyl-2-ethylene diisocyanate, cumene-2,4-diisocyanate, 4-methoxy-1,3-phenylene diisocyanate, 4-ethoxy-1,3-phenylene diisocyanate, 2,4'-diisocyanatodiphenyl ether, 5,6-dimethyl-1,3-phenylene diisocyanate, 4,4'-diisocyanatodiphenyl ether, benzidine diisocyanate, 9,10-anthracene diisocyanate, 4,4'-diisocyanatobenzil, 3,3'-dimethyl-4,4'-diisocyanatodiphenylmethane, 2,6-dimethyl-4,4'-diisocyanatodiphenyl, 3,3'-dimethoxy-4,4'-diisocyanatodiphenyl, 1,4-anthracene diisocyanate, phenylene diisocyanate, 2,4,6-tolylene triisocyanate, 2,4,4'-triisocyanatodiphenyl ether, 1,4-tetramethylene diisocyanate, 1,6-hexamethylene diisocyanate, 1,10-decamethylene diisocyanate, 1,3-cyclohexylene diisocyanate, 4,4'-methylene-bis(cyclohexyl isocyanate), or the like can be used

In one example of production of the polyfunctional urethane acrylate, the polyfunctional urethane acrylate can be produced by adding the above-described components (a) to (c) into an organic solvent (for example, methyl ethyl ketone) and reacting these components under heating as necessary. The end of the reaction can be confirmed once the presence of isocyanate groups is no longer observed in an infrared absorption spectrum.

The polyfunctional urethane acrylate is preferably a polyfunctional urethane acrylate having a weight-average molecular weight of 20,000 to 60,000, and more preferably a polyfunctional urethane acrylate having a weight-average molecular weight of 30,000 to 50,000. An excessively high weight-average molecular weight for the polyfunctional urethane acrylate results in higher viscosity, loss of smoothness, and worsening of interference fringes, whereas an excessively low weight-average molecular weight for the polyfunctional urethane acrylate results in lower viscosity, lack of retention of coated surface smoothness, and worsening of interference fringes.

Moreover, from a viewpoint of close adherence, the polyfunctional urethane acrylate preferably has a hydroxyl value of 0 mg KOH/g to 20 mg KOH/g, and more preferably has a hydroxyl value of 0 mg KOH/g to 5 mg KOH/g. Controlling the hydroxyl value to a low level yields an effect of maintaining close adherence well after damp heat testing. Note that a commercially available product may be used as the polyfunctional urethane acrylate.

**In** the present disclosure, it is preferable that the activating energy ray-cured resin that is contained in the activating energy ray-cured coating composition includes a polyfunctional (meth)acrylate compound and a polyfunctional urethane acrylate. In this case, it is preferable that 30 parts by mass to 90 parts by mass of the polyfunctional urethane acrylate, and more preferable that 50 parts by mass to 85 parts by mass of the polyfunctional urethane acrylate is contained relative to 100 parts by mass of the resin component contained in the activating energy ray-cured coating composition. Close adherence strength decreases when the amount of the polyfunctional urethane acrylate is less than 30 parts by mass, whereas hardness of the coating layer may be lost when the amount of the polyfunctional urethane acrylate is more than 90 parts.

No specific limitations are placed on the method by which the polyfunctional urethane (meth)acrylate is synthesized. For example, the polyfunctional urethane (meth)acrylate can be obtained through a urethane formation reaction of a polyisocyanate compound and a hydroxy group-containing (meth)acrylate. This reaction is preferable in terms of being suitable for obtaining a polyfunctional urethane (meth)acrylate that includes three or more acrylic groups in one molecule.

Moreover, with the aim of adjusting the molecular weight and molecular flexibility of the polyfunctional urethane (meth)acrylate, a general purpose polyol that is publicly known may be reacted with the polyisocyanate prior to reaction of the polyisocyanate and the hydroxy group-containing (meth)acrylate so as to produce a chain extended urethane prepolymer having terminal isocyanate groups, and then the hydroxy group-containing (meth)acrylate may be reacted with the chain extended urethane prepolymer to obtain a product that can then be used as the component (A). The polyol may be an ethylene oxide/propylene oxide addition product such as ethylene glycol, diethylene glycol, polyethylene glycol, propylene glycol, dipropylene glycol, polypropylene glycol, neopentyl glycol, 1,4-butanediol, 1,6-hexanediol, 3-methyl-1,5-pentanediol, a polyester polyol, an oxyethylene/oxypropylene copolymer, or the like, for example, without any specific limitations.

The activating energy ray-cured coating composition may contain a hydroxy group-containing (meth)acrylate, for example. The hydroxy group-containing (meth)acrylate may be 2-hydroxyethyl acrylate or methacrylate, 2-hydroxypropyl acrylate or methacrylate, ethylene glycol mono(meth)acrylate, propylene glycol mono(meth)acrylate, 2-hydroxy-3-methoxypropyl acrylate or methacrylate, pentaerythritol triacrylate or methacrylate, N-methylolacrylamide or methacrylamide, N-hydroxyacrylamide or methacrylamide, or the like, for example. A lactone addition product of any of these hydroxy group-containing (meth)acrylates (for example, the PCL-FA or PCL-FM series produced by Daicel Corporation) can also be used.

Examples of commercially available products of hydroxy group-containing (meth)acrylates include DPHA (produced by Daicel-Cytec Co., Ltd.), PETRA (produced by Daicel-Cytec Co., Ltd.; pentaerythritol triacrylate), PETIA (produced by Daicel-Cytec Co., Ltd.), ARONIX M-403 (produced by Toagosei Co., Ltd.; dipentaerythritol penta and hexaacrylate), ARONIX M-402 (produced by Toagosei Co., Ltd.; dipentaerythritol penta and hexaacrylate), ARONIX M-400 (produced by Toagosei Co., Ltd.; dipentaerythritol penta and hexaacrylate), SR-399 (produced by Sartomer; dipentaerythritol hydroxypentaacrylate), KAYARAD DPHA (produced by Nippon Kayaku Co., Ltd.), and KAYARAD DPHA-2C (produced by Nippon Kayaku Co., Ltd.). The above-described products have some hydroxy group-containing compound in the product.

Examples of specific product names of commercially available products of polyfunctional urethane (meth) acrylates including three or more (meth)acrylic groups in one molecule include difunctional urethane (meth)acrylates such as UX-2201 and UX-8101 produced by Nippon Kayaku Co., Ltd., UF-8001, UF-8003, UX-6101, and UX-8101 produced by Kyoeisha Chemical Co., Ltd., and Ebecryl 244, Ebecryl 284, Ebecryl 2002, Ebecryl 4835, Ebecryl 4883, Ebecryl 8807, and Ebecryl 6700 produced by Daicel-Cytec Co., Ltd.; trifunctional urethane (meth)acrylates such as Ebecryl 254, Ebecryl 264, and Ebecryl 265 produced by Daicel-Cytec Co., Ltd.; tetrafunctional urethane (meth)acrylates such as Ebecryl 8210 produced by Daicel-Cytec Co., Ltd.; hexafunctional urethane (meth)acrylates such as Ebecryl 1290k, Ebecryl 5129, Ebecryl 220, KRM8200, and Ebecryl 1290N produced by Daicel-Cytec Co., Ltd.; nonafunctional urethane (meth)acrylates such as KRM7804 produced by Daicel-Cytec Co., Ltd.; decafunctional urethane (meth)acrylates such as KRM8452 and KRM8509 produced by Daicel-Cytec Co., Ltd.; and pentadecafunctional urethane (meth)acrylates such as KRM8655 produced by Daicel-Cytec Co., Ltd.

For example, commercially available products such as ARONIX M-400, M-450, M-305, M-309, M-310, M-315, M-320, TO-1200, TO-1231, TO-595, and TO-756 (all produced by Toagosei Co., Ltd.), KAYARD D-310, D-330, DPHA, and DPHA-2C (all produced by Nippon Kayaku Co., Ltd.), and NIKALAC MX-302 (produced by Sanwa Chemical Co., Ltd.), which are polyfunctional (meth)acrylate compounds including two or more (meth)acryloyl groups in a molecule, may be used.

The use of a radiation-cured resin containing a polyfunctional (meth)acrylate compound, a polyfunctional urethane acrylate, and so forth as described above is advantageous in terms that it is possible to obtain a laminate film for shaping decoration that has excellent light resistance and that does not experience photodegradation due to long-term use.

(Photopolymerization initiator)

The activating energy ray-cured coating composition according to the present disclosure preferably contains a photopolymerization initiator. The presence of a photopolymerization initiator results in good polymerization of the resin component through irradiation with activating energy rays such as ultraviolet light. Examples of photopolymerization initiators that may be used include alkylphenone photopolymerization initiators, acylphosphine oxide photopolymerization initiators, titanocene photopolymerization initiators, and oxime ester photopolymerization initiators. Examples of alkylphenone photopolymerization initiators include 2,2-dimethoxy-1,2-diphenylethan-1-one, 1-hydroxycyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-methyl-propan-1-one, 2-methyl-1-(4-methylthiophenyl)-2-morpholinopropan-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone. Examples of acylphosphine oxide photopolymerization initiators include 2,4,6-trimethylbenzoyl-diphenyl-phosphine oxide and bis(2,4,6-trimethylbenzoyl)-phenyl-phosphine oxide. Examples of titanocene photopolymerization initiators include bis($\eta$5-2,4-cyclopen-tadien-1-yl)-bis(2,6-difluoro-3-(1H-pyrrol-1-yl)-phenyl) titanium. Examples of oxime ester polymerization initiators include 1,2-octanedione, 1-[4-(phenylthio)-, 2-(O-benzoyloxime)]; ethanone, 1-[9-ethyl-6-(2-methylbenzoyl)-9H-carbazol-3-yl]-, 1-(O-acetyloxime); oxyphenylacetic acid; 2-[2-oxo-2-phenylacetoxyethoxy] ethyl ester; and 2-(2-hydroxyethoxy) ethyl ester. One of these photopolymerization initiators may be used individually, or two or more of these photopolymerization initiators may be used in combination.

Of these photopolymerization initiators, 2-hydroxy-2-methyl-1-phenyl-propan-1-one, 1-hydroxycyclohexyl phenyl ketone, 2-methyl-1-(4-methylthiophenyl)-2-morpholinopropan-1-one, 2-benzyl-2-dimethylamino-1-(4-morpholinophenyl)butanone-1, and 2,2-dimethoxy-1,2-diphenylethan-1-one, and the like are more preferable.

The preferred amount of the photopolymerization initiator is 0.01 parts by mass to 20 parts by mass relative to 100 parts by mass of the resin component in the activating energy ray-cured coating composition, with 1 part by mass to 10 parts by mass being more preferable. Moreover, one photopolymerization initiator may be used individually, or two or more photopolymerization initiators may be used in combination.

(Other components)

Compounds that are typically added as ingredients of coating materials may be contained as other components in the activating energy ray-cured coating composition. Examples of other components include ultraviolet absorbers (UVA), light stabilizers (HALS), binder resins, cross-linkers, pigments, surface conditioners, defoamers, conductive fillers, and solvents.

Moreover, a solvent may be used in order to mix the components that are contained in the activating energy ray-cured coating composition or in order to adjust the viscosity. The solvent may be one type or a combination of two or more types of conventional organic solvents that are publicly known and that are used in coating materials such as those based on esters, ethers, alcohols, amides, ketones, aliphatic hydrocarbons, alicyclic hydrocarbons, and aromatic hydrocarbons. Note that when a solvent such as described above is used, pinholes or swelling may arise when the laminate film is used to decorate a substrate due to volatilization of a volatile substance in a situation in which a volatile substance remains in the laminate film. Therefore, it is preferable to sufficiently reduce the amount of volatile substances contained in the laminate film.

The activating energy ray-cured coating composition preferably further contains 0.5 parts by weight to 60 parts by weight of an inorganic or organic filler having an average primary particle diameter of 100 nm or less. This can enhance blocking resistance, scratch resistance, and surface hardness. The lower limit for the compounded amount described above is more preferably 1 weight%, and the upper limit for the compounded amount is more preferably 50 weight%.

Examples of inorganic fillers include silica, micronized glass, alumina, calcium carbonate, kaolin, clay, sepiolite (magnesium silicate), talc (magnesium silicate), mica (aluminum silicate), xonotlite (calcium silicate), aluminum borate, hydrotalcite, wollastonite (calcium silicate), potassium titanate, titanium oxide, barium sulfate, magnesium sulfate, magnesium hydroxide, yttria, ceria, silicon carbide, boron carbide, zirconia, aluminum nitride, silicon nitride, eutectic mixtures of any of these examples, and non-metallic inorganic materials (also referred to as "ceramic fillers") obtained through molding, firing, etc. Of these inorganic fillers, silica, alumina, zirconia, and eutectic mixtures thereof are preferable in terms of cost and effect.

Examples of organic fillers include beads of various resins of acrylic, styrene, silicone, polyurethane, acrylic urethane, benzoguanamine, and polyethylene.

Moreover, examples of commercially available organic fillers that can be used include ORGANOSILICASOL MIBK-ST, MEK-ST-UP, MEK-ST-L, and MEK-AC-2140Z (produced by Nissan Chemical Industries, Ltd.), and SIRMIBK15ET%-H24, SIRMIBK15ET%-H83, and ALMIBK30WT%-H06 (produced by CIK NanoTek Corporation).

The activating energy ray-cured coating composition may contain 0.5 weight% to 20 weight% (solid content ratio in coating material) of a polyisocyanate compound including an isocyanate group. The compounding of a polyisocyanate compound is preferable in terms that formability (stretchability) and scratch resistance can be imparted. The lower limit for the compounded amount described above is more preferably 2 weight%, and the upper limit for the compounded amount described above is more preferably 18 weight%.

The film thickness of the coating layer is not specifically limited but is preferably 3 μm to 60 μm.

It is preferable to ensure at least a certain film thickness in order to maintain performance in terms of surface hardness, scratch resistance, and so forth. The viscosity of the coating material is dependent on the method by which a coating film is formed but is preferably 50 mPa·s to 5,000 mPa·s, and more preferably 100 mPa·s to 3,000 mPa·s. A lower viscosity than described above makes it difficult to ensure film thickness and results in poorer workability. A higher viscosity than described above results in the occurrence of defects such as swelling during shaping due to the remaining presence of air.

(Design layer)

The design layer is a coating film of a design layer coating material and is the main layer responsible for design properties of a decorative laminate. A conventional base layer of an automobile topcoat coating film or design layer or coloring layer of a decorative laminate that is publicly known can be used as the design layer.

Any of the resin components given as examples for the previously described clear layer coating material, for example, may be used as a resin component of the design layer coating material.

In one embodiment, the resin component of the design layer coating material includes a thermoset resin. In another embodiment, the resin component of the design layer coating material includes a thermoset resin and a photocured resin. In yet another embodiment, the resin component of the design layer coating material is only a thermoset resin.

The resin component of the design layer coating material may be one type of resin component used individually or may be two or more types of resin components used in combination.

The resin component of the design layer coating material and the resin component of the clear layer coating material may be the same or may be different. From a viewpoint of inhibiting mixing of the design layer and the clear layer and increasing distinctness of design of the design layer as viewed by an observer, it is preferable that the resin component of the design layer coating material and the resin component of the clear layer coating material are different, and more preferable that the resin component of the design layer is a urethane resin.

The urethane resin contained in the design layer coating material is preferably a urethane resin having an Mw of 10,000 to 200,000, and more preferably 30,000 to 150,000, but is not specifically limited thereto. Flexibility of the design layer increases when Mw is 10,000 or more, whereas producibility and coatability onto a substrate film of the design layer coating material increase when Mw is 200,000 or less.

Tg of the urethane resin is preferably -30°C to 30°C. Coating film tackiness (blocking) after application and after drying increases when Tg of the urethane resin is -30°C or higher, whereas coating film hardness decreases, formability increases, and low temperature physical properties as a product also increase when Tg is 30°C or lower.

The amount of the resin component of the design layer coating material should be adjusted as appropriate and may be 10 mass% to 60 mass%, and preferably 20 mass% to 50 mass% relative to the total mass of the design layer coating material inclusive of a solvent, for example.

Publicly known pigments can be used as a pigment of the design layer coating material without any specific limitations. The pigment may be an inorganic pigment, an organic pigment, or the like, for example. The pigment may be a metal such as aluminum, copper, zinc, iron, nickel, tin, or aluminum oxide; an alloy of any of these metals; a glitter pigment such as interference mica, white mica, graphite, glass flake, or alumina flake; or a scaly glitter pigment in which any of these metals, alloys, interference mica, white mica, graphite, glass flake, or alumina flake is coated with a metal oxide (for example, titanium oxide, titanium dioxide, or iron oxide) or a metal (for example, gold or silver), for example. Other examples include an alumina flake pigment (a) described in JP2016-221473A; a scaly glitter pigment in which a metal substrate or glass flake substrate is coated with a metal oxide or metal; a scaly glitter pigment in which a coloring pigment is chemically adsorbed to the surface of a metal substrate or glass substrate; an aluminum pigment in which an aluminum oxide layer is formed at the surface of an aluminum substrate; an aluminum solid solution plate-shaped iron oxide pigment; a scaly glitter pigment in which the surface of interference mica, graphite, or silica flake is coated with titanium dioxide; and a plate-shaped iron oxide pigment.

The amount of the pigment of the design layer coating material should be adjusted as appropriate and may be 5 mass% to 70 mass%, and preferably 3 mass% to 60 mass% relative to the total mass of the design layer coating material inclusive of a solvent, for example.

Any of the solvents given as examples for the previously described clear layer coating material, for example, may be used as a solvent of the design layer coating material. One solvent may be used individually, or two or more solvents may be used in combination.

The design layer coating material may be an aqueous coating material or may be a solvent-based coating material.

Conventional additives used in design layer coating materials that are publicly known may be compounded in the design layer coating material in addition to the resin component and the solvent. Examples of such additives include the additives given as examples for the previously described clear layer coating material.

The viscosity of the design layer coating material should be adjusted as appropriate and may be 100 mPa·s to 7,000 mPa·s, and preferably 300 mPa·s to 4,000 mPa·s, for example.

In one embodiment, the clear layer coating material has a viscosity of 300 mPa·s to 2,000 mPa·s, and the design layer coating material has a viscosity of 300 mPa·s to 4,000 mPa·s.

The thickness of the design layer should be adjusted as appropriate and may be 5 $\mu$m to 30 $\mu$m, and preferably 10 $\mu$m to 25 $\mu$m, for example.

The design layer may be composed of two or more design layers. For example, a first design layer and a second design layer that differ in terms of resin component, an ingredient (pigment, etc.) in the coating material, thickness, etc. may be combined as the design layer. In the case of a plurality of design layers, the absolute value of a difference between the solubility parameter (SP) value of the resin component of the clear layer coating material and the solubility parameter (SP) value of a resin component of a design layer coating material that is used to form a design layer that is adjacent to the clear layer is preferably 0.10 or more.

(Resin substrate)

Conventional resin substrates and substrate films that are publicly known can be used as the resin substrate without any specific limitations. For example, any of the films given as examples for the previously described protective film may be used as the resin substrate. The substrate film is preferably a thermoplastic polyurethane resin film. The inclusion of the resin substrate is advantageous in terms that strength of the laminate film is maintained and that the laminate film can be peeled off without rupture after it has been affixed to an adherend. Workability during affixing of the laminate film also improves. For example, this makes it possible to affix the laminate film by hand while extending the soft film and imparting force.

The resin substrate may be a resin substrate that has undergone surface modification treatment such as corona treatment or low temperature plasma treatment. Moreover, the substrate film may contain an additive such as a flame retardant, an antistatic agent, or an ultraviolet blocker.

The thickness of the resin substrate should be adjusted as appropriate and may be 25 $\mu$m to 300 $\mu$m, and preferably 50 $\mu$m to 200 $\mu$m, for example.

(Adhesive layer)

The adhesive layer has a function of affixing the laminate film to an object. Conventional adhesive layers, bonding layers, double-sided tapes, and bonding agents that are publicly known can be used as the adhesive layer without any specific limitations.

The adhesive layer is used in order to adhere the laminate film to the surface of an adherend. An adhesive layer included in a typical decorative laminate film is a layer aimed at permanently adhering the laminate film and an adherend. In contrast, the laminate film of the present disclosure is a peelable laminate film, and thus it is preferable that the adhesive layer has a suitable level of adhesive strength.

Any conventional adhesive that is publicly known may be used as an adhesive contained in the adhesive layer without any specific limitations. For example, VYLON UR-3200 (produced by Toyobo Co., Ltd.), UR-1361ET (produced by Toagosei Co., Ltd.), SK Dyne® (SK Dyne is a registered trademark in Japan, other countries, or both; produced by Soken Chemical & Engineering Co., Ltd.), or the like can be used as the adhesive. The adhesive may be formed through application and drying of an adhesive such as described above or may be formed through lamination of an adhesive sheet. Although various types of publicly known materials can be used in the adhesive layer, it is preferable that an acrylic resin, a urethane resin, a polyester resin, a silicone resin, a rubber resin, or the like is used as a resin, and it is preferable that the resin is cross-linked by an isocyanate. Moreover, the inclusion of a coupling agent is preferable, and the lamination of a film for glass adhesion or the like is also preferable. Specifically, acrylic resin Arotan 2050-55 produced by Nippon Shokubai Co., Ltd. can suitably be used as the resin, KBM-803, KBM-903, KBM-9007N, KBE-9013, or X12-1056ES produced by Shin-Etsu Chemicals, Co., Ltd. can suitably be used as the coupling agent, and OCA Film 8211, 8212, 8213, or 8146-1 produced by 3M can suitably be used as the film.

From a viewpoint of ensuring close adherence of the adhesive layer to an object and displaying peel strength to the extent that peeling is possible as necessary, the adhesive layer preferably contains an acrylic resin and an isocyanate compound. Moreover, the adhesive layer may contain an additive such as a flame retardant, an antistatic agent, or an ultraviolet blocker.

From a viewpoint of ensuring close adherence of the adhesive layer to an object and displaying peel strength to the extent that peeling is possible as necessary, the peel strength of the adhesive layer with respect to an object is preferably 1.0 N/25 mm to 50.0 N/25 mm.

Suitable adhesive strength of the adhesive layer can, for example, be expressed as an adhesive strength in a range of not less than 1.0 N/25 mm and not more than 50.0 N/25 mm when the laminate film is peeled from the resin substrate.

When the adhesive strength is more than 50.0 N/25 mm, the adhesive layer has a similar level of adhesive strength to a typical bonding layer, which results in complete adherence to an adherend and makes re-peeling difficult. Conversely, an adhesive strength of less than 1.0 N/25 mm tends to result in insufficient adhesive strength and the occurrence of lifting up from an adherend. An adhesive strength that is within a range such as set forth above enables simple peeling. The adhesive strength described above can be measured by a known method using a Peel Force Tester (produced by ADY Ltd.) or the like, for example.

The thickness of the adhesive layer should be adjusted as appropriate and may be 5 $\mu$m to 2 mm, and preferably 10 $\mu$m to 50 $\mu$m, for example.

In one embodiment, a release film is provided on the surface at the opposite side of the adhesive layer relative to the resin substrate, and the surface roughness of a surface at the adhesive layer-side of the release film is 20 nm to 100 nm.

(Adherend)

The adherend is for affixing of the laminate film L and can be a conventional resin sheet or the like that is publicly known without any specific limitations on material, hardness, and so forth.

In one embodiment, the surface of the adherend has an arithmetic average roughness of 0.01 $\mu$m to 0.6 $\mu$m.

(Laminate film L)

The term "laminate film L" refers to a laminate film not including the protective film that results from peeling of the protective film from the laminate film at a rate of 5.0 mm/s.

The surface roughness Rac of a surface at an opposite side of the coating layer of the laminate film L relative to the resin substrate (i.e., the surface where the protective film has been peeled off) and the surface roughness Rap of a surface at a coating layer-side of the protective film that has been peeled off (i.e., the surface that was in contact with the coating layer) satisfy the following equation 1.

$$50.0 \le (Rac/Rap) \times 100 \le 210.0 \cdots \text{Equation 1}$$

By transferring the surface shape of the protective film to the coating layer, it is possible to change the surface shape of the laminate film L and to change (design) an optical property (luster). Moreover, optical property changes are not observed even under high temperature and high humidity conditions.

In a case in which Rap of the protective film is 0.1 um or more, the value of the preceding equation is preferably not less than 60 and not more than 135.

With a value of less than 50, peeling of the protective film is possible, but it has not been possible to provide an arbitrary optical property according to needs due to excessive film hardness.

With a value of more than 210, peeling of the protective film is difficult and it has not been possible to provide an arbitrary optical property according to needs due to excessive film softness.

The surface free energy γac of the surface at the opposite side of the coating layer of the laminate film L relative to the resin substrate and the surface free energy γap at the coating layer-side of the protective film that has been peeled from the laminate film at a rate of 5.0 mm/s satisfy the following equation 2.

$$50.0 \le (\gamma ac/\gamma ap) \times 100 \le 110.0 \cdots \text{Equation 2}$$

In the same manner as described above, this means that the surface shape of the protective film can be transferred to the coating layer.

With a value of less than 50, peeling of the protective film is difficult and it has not been possible to provide an arbitrary optical property according to needs due to excessive film hardness.

With a value of more than 110, peeling of the protective film is possible, but it has not been possible to provide an arbitrary optical property according to needs due to excessive film softness.

The 60° gloss G(IL) of the laminate film L and the 60° gloss G(IC) of the laminate film L in a composite of the laminate film L and an adherend resulting from affixing of the laminate film L to the adherend satisfy the following equation 3.

$$85.0 \le (G(IC)/G(IL)) \times 100 \le 110.0 \cdots \text{Equation 3}$$

It is preferable that $95.0 \le (G(IC)/G(IL)) \times 100 \le 105.0$.

With a value of less than 85.0, the remaining presence of unreacted sites and film softening have meant that when a film having surface unevenness is affixed to an adherend using a roller or the like, surface roughening has occurred or the film has been influenced by surface roughness of the adherend.

In other cases, excessive film hardening has meant that cracking occurs during affixing to an adherend and that an arbitrary optical property cannot be preserved.

With a value of more than 120.0, the remaining presence of unreacted sites and film softening have meant that when a film not having surface unevenness is affixed to an adherend using a roller or the like, surface roughening has occurred or the film has been influenced by surface roughness of the adherend.

The Martens hardness of the coating layer of the laminate film L satisfies the following equation 5.

$$2 \text{ N/mm2} \le HM(L) \le 50 \text{ N/mm2} \cdots \text{Equation 5}$$

With a value of less than 2 N/mm2, it has not been possible to provide a laminate film having excellent durability due to excessive film softness and the occurrence of shape change after damp heat testing.

With a value of more than 50 N/mm2, it has not been possible to provide a laminate film having excellent durability due to excessive film hardness and the occurrence of cracking after damp heat testing.

The 60° gloss G(A) of the surface of the laminate film L in the composite after 1500 hours of treatment at a humidity of 85% and a temperature of 85°C and the 60° gloss G(IC) of the surface of the laminate film L in the composite before damp heat testing under conditions of a humidity of 85% and a temperature of 85°C satisfy the following equation 5.

$$70.0 \le (G(A)/G(IC)) \times 100 \le 120.0 \cdots \text{Equation 5}$$

It is preferable that $80.0 \le (G(A)/G(IC)) \times 100 \le 110.0$.

With a value of less than 70.0, it has not been possible to provide a laminate film having excellent durability because the remaining presence of unreacted sites and film softening have meant that a flat film without surface unevenness before undergoing damp heat resistance testing cannot preserve its surface shape after damp heat testing and suffers from surface roughening.

With a value of more than 120.0, it has not been possible to provide a laminate film having excellent durability because the remaining presence of unreacted sites and film softening have meant that a film having surface unevenness before undergoing damp heat resistance testing cannot preserve its surface shape after damp heat resistance testing and suffers from surface roughening.

Tg of the coating layer in the laminate film L after curing is 25.0°C to 120.0°C.

With a Tg of lower than 25.0°C, the coating layer has tackiness at room temperature, and it has not been possible to provide an arbitrary optical property after peeling of the protective film.

With a Tg of higher than 120.0°C, it has not been possible to provide a laminate film having excellent durability due to excessive hardness of the coating layer and the occurrence of cracking after damp heat testing.

The extensibility of the laminate film L is 50% to 300%, and more preferably 100% to 200%.

With an extensibility of less than 50.0, it has not been possible to preserve an arbitrary optical property due to excessive film hardening and cracks readily forming during affixing to an adherend.

With an extensibility of more than 300.0, it has not been possible to preserve an arbitrary optical property due to excessive film softening and greater susceptibility to the influence of a foundation during affixing to an adherend. Moreover, excessive film softening has also meant that shape cannot be maintained during protective film peeling and that an arbitrary optical property according to needs cannot be provided.

(Article)

An article according to the present disclosure includes an adherend and a laminate film L resulting from peeling of the protective film from the laminate film described above, wherein
the adhesive layer of the laminate film L is in contact with the adherend.

EXAMPLES

The following provides a more detailed description of the present disclosure through examples. However, these examples are for illustrative purposes and are not intended to limit the scope of the present disclosure in any way.

Protective films used in the examples are as follows.

Gloss protective film: Lupilon A4160 (product name) produced by Toyobo Co., Ltd.; PET film; thickness 50 $\mu$m
Matte protective film: KB Film (product name) produced by Kimoto Co., Ltd.; PET film; thickness 188 $\mu$m

Details of components in thermoset coating (clear) layer coating materials used in the examples are as follows.

Acrylic resin: LR2731 (product name) produced by Mitsubishi Rayon Co., Ltd.; Tg 20°C; Mw 5,500; hydroxyl value 170 mg KOH/g; solid content 70%
Fluororesin: LUMIFLON LF600X (product name) produced by AGC Inc.; hydroxyl value 50 mg KOH/g; solid content 50%
Silicone resin: BYK-SILCLEAN 3700 (product name) produced by BYK; hydroxyl value 30 mg KOH/g; solid content 25%
Polycarbonate polyol: DURANOL T5650E (product name) produced by Asahi Kasei Corporation; hydroxyl value 225 mg KOH/g
Polycaprolactone polyol: PLACCEL 210 (product name) produced by Daicel Corporation; Tg 20°C or lower; Mw 1,000; hydroxyl value 110 mg KOH/g
UVA 1: Benzotriazole compound
UVA 2: Triazine compound
HALS: Hindered amine compound
Additive 1: Thermally reactive silicone compound
Additive 2: Thermally reactive fluorine compound
Curing agent: H-2550 (product name) produced by Nippon Paint Automotive Coatings Co., Ltd.; isocyanate compound

Details of components in an activating energy ray-cured coating (clear) layer coating material used in the examples are as follows.

Polyfunctional acrylate: ARONIX M-315 (product name) produced by Toagosei Co., Ltd.
Urethane acrylate: CN-9893 (product name) produced by Arkema
Photopolymerization initiator: α-Hydroxyacetophenone

Details of components in design layer coating materials used in the examples are as follows.

Polyacrylic polyol: COATAX A-200 (product name) produced by Toray Fine Chemicals Co., Ltd.
Pigment: Xirallic® (Xirallic is a registered trademark in Japan, other countries, or both) T60-23 SW Galaxy Blue (product name) produced by Merck & Co., Inc.
Curing agent: H-2550 (product name) produced by Nippon Paint Automotive Coatings Co., Ltd.; isocyanate compound

Details of a resin substrate used in the examples are as follows.
Resin substrate: ESMER PX98 (product name) produced by Nihon Matai Co., Ltd.; thermoplastic polyurethane resin film; thickness 150 μm
Details of an adhesive layer composition used in the examples are as follows.

Acrylic resin: SK Dyne 1811L (product name) produced by Soken Chemical & Engineering Co., Ltd.; Tg -7°C; Mw 5,500; solid content 70%
Isocyanate compound: TD-75 (product name) produced by Soken Chemical & Engineering Co., Ltd.

(Production of thermoset coating (clear) layer coating material)

The acrylic resin, the polycarbonate polyol, and the polycaprolactone polyol were mixed in a formulation (parts by mass) indicated in Table 1. After this mixing, the UVA, HALS, additives, and curing agent were mixed therewith, and then the viscosity was adjusted through dilution with methyl ethyl ketone as necessary to produce a thermoset coating layer coating material.

(Production of activating energy ray-cured coating layer coating material)

The polyfunctional urethane acrylate and the polyurethane acrylate were mixed in a formulation (parts by mass) indicated in Table 2. After this mixing, the photopolymerization initiator was mixed therewith to produce an activating energy ray-cured coating layer coating material.

(Production of design layer coating material)

The pigment was mixed with the polyacrylic polyol in a formulation (parts by mass) indicated in Table 2. After this mixing, the curing agent was mixed therewith, and then the viscosity was adjusted through dilution with methyl ethyl ketone as necessary to produce a design layer coating material.

(Example 1)

The thermoset coating layer coating material was applied onto one surface of the resin substrate by a Baker applicator such as to have a dry film thickness of 25 μm to 30 μm, and then an uncured coating layer of the applied coating material was heated at a temperature of 120°C for 2.5 minutes to form a coating layer. Thereafter, a laminator, etc. was used to perform lamination of the matte protective film onto the surface of the coating layer under conditions of a temperature of 23°C. After lamination, 4 days of conditioning was performed in a 50°C environment so as to cure the coating layer.
The adhesive layer composition was applied onto the surface at the opposite side of the resin substrate relative to the surface where the coating layer had been formed using a Baker applicator such as to have a dry film thickness of 30 μm and was then dried at 100°C for 5 minutes to coat the surface with an adhesive layer. Thereafter, a laminator, etc. was used to affix a separator to the adhesive layer, and then 7 days of conditioning was performed in a 50°C environment to obtain a laminate film including an adhesive layer.

(Examples 2 to 6)

Laminate films were produced by the same procedure as in Example 1 with the exception that the type of protective film, the heating temperature, the resin ratio, and the amount of curing agent were changed as indicated in Table 1.

(Example 9)

The activating energy ray-cured coating layer coating material was applied onto one surface of the resin substrate by a bar coater such as to have a dry film thickness of 10 $\mu$m, and then an uncured coating layer of the applied coating material was heated at a temperature of 80°C for 1.0 minutes to form a coating layer. Thereafter, a laminator, etc. was used to perform lamination of the matte protective film onto the surface of the coating layer under conditions of a temperature of 23°C. After lamination, irradiation with activating energy rays having an integrated luminous intensity of 2,000 mJ/cm2 was performed so as to cure the coating layer.

The adhesive layer composition was applied onto the surface at the opposite side of the resin substrate relative to the surface where the coating layer had been formed using a Baker applicator such as to have a dry film thickness of 30 $\mu$m and was then dried at 100°C for 5 minutes so as to coat the surface with an adhesive layer. Thereafter, a laminator, etc. was used to affix a separator to the adhesive layer, and then 7 days of conditioning was performed in a 50°C environment to obtain a laminate film including an adhesive layer.

(Example 10)

A laminate film was produced by the same procedure as in Example 9 with the exception that the type of protective film was changed as indicated in Table 2.

(Example 11)

The design layer coating material was applied onto one surface of the resin substrate by a Baker applicator such as to have a dry film thickness of 20 $\mu$m, and then an uncured design layer of the applied coating material was heated at a temperature of 100°C for 5 minutes to form a design layer. Thereafter, a laminator, etc. was used to perform lamination of the protective film onto the surface of the design layer under conditions of a temperature of 23°C. After lamination, 7 days of conditioning was performed in a 50°C environment so as to cure the design layer. The thermoset clear layer coating material was applied onto the cured design layer by a Baker applicator such as to have a dry film thickness of 25 $\mu$m to 30 $\mu$m, and then an uncured thermoset coating layer of the applied coating material was heated at a temperature of 120°C for 2.5 minutes to form a thermoset clear layer. Thereafter, a laminator, etc. was used to perform lamination of the matte protective film onto the surface of the thermoset clear layer under conditions of a temperature of 23°C. After lamination, 4 days of conditioning was performed in a 50°C environment so as to cure the thermoset clear layer.

The adhesive layer composition was applied onto the surface at the opposite side of the resin substrate relative to the surface where the design layer and the coating layer had been formed using a Baker applicator such as to have a dry film thickness of 30 $\mu$m and was then dried at 100°C for 5 minutes so as to coat the surface with an adhesive layer. Thereafter, a laminator, etc. was used to affix a separator to the adhesive layer, and then 7 days of conditioning was performed in a 50°C environment to obtain a laminate film including an adhesive layer.

(Examples 12 to 14)

Laminate films were produced by the same procedure as in Example 11 with the exception that the resin ratio and the protective film were changed as indicated in Table 3.

(Example 15)

The design layer coating material was applied onto one surface of the resin substrate by a Baker applicator such as to have a dry film thickness of 20 $\mu$m, and then an uncured design layer of the applied coating material was heated at a temperature of 100°C for 5 minutes to form a design layer. Thereafter, a laminator, etc. was used to perform lamination of the protective film onto the surface of the design layer under conditions of a temperature of 23°C. After lamination, 7 days of conditioning was performed in a 50°C environment so as to cure the design layer. The thermoset coating layer coating material was applied onto the surface at the opposite side of the resin substrate relative to the surface that was coated with the design layer by a Baker applicator such as to have a dry film thickness of 25 $\mu$m to 30 $\mu$m, and then an uncured coating layer of the applied coating material was heated at a temperature of 120°C for 2.5 minutes to form a coating layer. Thereafter, a laminator, etc. was used to perform lamination of the matte protective film onto the surface of the coating layer under conditions of a temperature of 23°C. After lamination, 4 days of conditioning was performed in a 50°C environment so as to cure the coating layer. The adhesive layer composition was applied onto the surface where the design layer had been formed by a Baker applicator such as to have a dry film thickness of 30 $\mu$m and was then dried at 100°C for 5 minutes so as to coat the surface with an adhesive layer. Thereafter, a laminator, etc. was used to affix a separator to the adhesive layer, and then 7 days of conditioning was performed in a 50°C environment to obtain a laminate film including an adhesive layer.

(Example 15)

A laminate film was produced by the same procedure as in Example 15 with the exception that the protective film was changed as indicated in Table 4.

(Comparative Examples 1 to 7)

Laminate films were produced by the same procedure as in Example 1 with the exception that the type of protective film, the heating temperature, and the amount of curing agent were changed as indicated in Table 5.

[Table 1]

| | | | | Example 1 | Example 2 | Example 3 | Example 4 | Example 5 | Example 6 | Example 7 | Example 8 |
|---|---|---|---|---|---|---|---|---|---|---|---|
| Processing conditions | Protective film | | Type | Matte | Gloss | Gloss | Matte | Matte | Matte | Matte | Matte |
| | | | Surface roughness Rap | 0.57 | 0.01 | 0.05 | 0.70 | 0.55 | 0.58 | 0.58 | 0.58 |
| | | | Surface free energy $\gamma$ap | 41.3 | 47.2 | 46.5 | 45.3 | 42.3 | 43.4 | 43.4 | 43.4 |
| | Coating layer | | Coating material curing type | Thermoset | Thermoset | Thermoset | Thermoset | Thermoset | Thermoset | Thermoset | Thermoset |
| | | Main ingredient (parts by mass) | Acrylic resin | 50.0 | 50.0 | 50.0 | 50.0 | 80.0 | 0.0 | 0.0 | 0.0 |
| | | | Fluororesin | 0.0 | 0.0 | 0.0 | 0.0 | 0.0 | 0.0 | 80.0 | 0.0 |
| | | | Silicone resin | 0.0 | 0.0 | 0.0 | 0.0 | 0.0 | 0.0 | 0.0 | 50.0 |
| | | | Polycarbonate polyol | 20.0 | 20.0 | 20.0 | 20.0 | 0.0 | 0.0 | 0.0 | 20.0 |
| | | | Polycaprolactone polyol | 10.0 | 10.0 | 10.0 | 10.0 | 0.0 | 80.0 | 0.0 | 10.0 |
| | | Other (parts by mass) | UVA 1 | 1.0 | 1.0 | 1.0 | 1.0 | 1.0 | 1.0 | 1.0 | 1.0 |
| | | | UVA 2 | 1.0 | 1.0 | 1.0 | 1.0 | 1.0 | 1.0 | 1.0 | 1.0 |
| | | | HALS | 1.0 | 1.0 | 1.0 | 1.0 | 1.0 | 1.0 | 1.0 | 1.0 |
| | | | Additive 1 | 10.0 | 10.0 | 10.0 | 10.0 | 10.0 | 10.0 | 10.0 | 10.0 |
| | | | Additive 2 | 7.0 | 7.0 | 7.0 | 7.0 | 7.0 | 7.0 | 7.0 | 7.0 |
| | | Curing agent (parts by mass) | | 40.0 | 40.0 | 40.0 | 180.0 | 10.0 | 5.0 | 40.0 | 40.0 |
| | | Dry film thickness ($\mu$m) | | 30 | 30 | 30 | 30 | 30 | 30 | 30 | 30 |
| | | Drying conditions | | 120°C × 2.5 min | 120°C × 2.5 min | 80°C × 2.5 min | 120°C × 2.5 min | 120°C × 2.5 min | 120°C × 2.5 min | 120°C × 2.5 min | 120°C × 2.5 min |
| Physical properties of laminate film | | Surface roughness Rac | | 0.67 | 0.02 | 0.03 | 0.74 | 0.65 | 0.62 | 0.62 | 0.63 |
| | | Surface roughness Rap | | 0.57 | 0.01 | 0.05 | 0.70 | 0.55 | 0.58 | 0.57 | 0.56 |
| | | Surface free energy $\gamma$ac | | 27.9 | 46.3 | 42.0 | 47.2 | 41.3 | 28.9 | 28.2 | 26.2 |
| | | Surface free energy $\gamma$ap | | 41.3 | 47.2 | 46.5 | 45.3 | 42.3 | 43.4 | 41.2 | 41.5 |
| | | Gloss G(IL) of laminate film by itself | | 6.5 | 92.3 | 91.3 | 6.9 | 6.4 | 6.3 | 6.5 | 6.5 |
| | | Rac/Rap × 100 | | 117.5 | 200.0 | 63.8 | 105.7 | 118.2 | 106.9 | 108.8 | 112.5 |

(continued)

| | | Example 1 | Example 2 | Example 3 | Example 4 | Example 5 | Example 6 | Example 7 | Example 8 |
|---|---|---|---|---|---|---|---|---|---|
| | $\gamma ac/\gamma ap \times 100$ | 67.6 | 98.1 | 90.3 | 104.2 | 97.6 | 66.6 | 68.4 | 63.1 |
| | HM(L) | 6.5 | 6.1 | 3.2 | 34.5 | 47.0 | 2.6 | 5.5 | 4.6 |
| | Post-reaction Tg | 72.4 | 73.5 | 74.3 | 111.1 | 92.1 | 30.1 | 61.2 | 72.5 |
| | Extensibility | 100 | 100 | 90 | 80 | 65 | 140 | 300 | 150 |
| | Transferability | Good | Good | Good | Good | Good | Good | Good | Good |
| Physical properties of composite (laminate film + adherend) | Gloss G(IC) of laminate film affixed to adherend before humidity resistance testing | 6.5 | 94.6 | 95.8 | 6.4 | 6.5 | 6.5 | 6.5 | 6.6 |
| | Gloss G(A) of laminate film affixed to adherend after humidity resistance testing | 6.7 | 96.2 | 95.4 | 6.7 | 6.8 | 6.8 | 6.6 | 6.5 |
| | G(IC)/G(IL) $\times$ 100 | 100.0 | 102.5 | 104.9 | 92.8 | 101.6 | 103.2 | 100.0 | 101.5 |
| | G(A)/G(IC) $\times$ 100 | 103.1 | 101.7 | 99.6 | 104.7 | 104.6 | 104.6 | 101.5 | 98.5 |
| | Optical property | A | A | A | B | A | A | A | A |
| | Damp heat resistance | A | A | A | A | A | A | A | A |

[Table 2]

| | | | Example 9 | Example 10 |
|---|---|---|---|---|
| Processing conditions | Protective film | Type | Matte | Gloss |
| | | Surface roughness Rap | 0.57 | 0.01 |
| | | Surface free energy γap | 41.3 | 47.2 |
| | Coating layer | Coating material curing type | Activating energy ray-cured | Activating energy ray-cured |
| | | Polyfunctional acrylate | 23.0 | 23.0 |
| | | Urethane acrylate | 75.0 | 75.0 |
| | | Photopolymerization initiator | 2.0 | 2.0 |
| | | Dry film thickness (μm) | 30 | 30 |
| | | Drying conditions | 80°C × 1 min | 80°C × 1 min |
| Physical properties of laminate film | | Surface roughness Rac | 0.65 | 0.02 |
| | | Surface roughness Rap | 0.55 | 0.01 |
| | | Surface free energy γac | 26.8 | 47.4 |
| | | Surface free energy γap | 40.2 | 46.5 |
| | | Gloss G(IL) of laminate film by itself | 6.5 | 92.3 |
| | | Rac/Rap × 100 | 118.2 | 200.0 |
| | | γac/γap × 100 | 66.7 | 101.9 |
| | | HM(L) | 8.5 | 8.7 |
| | | Post-reaction Tg | 72.3 | 75.5 |
| | | Extensibility | 60 | 60 |
| | | Transferability | Good | Good |
| Physical properties of composite (laminate film + adherend) | | Gloss G(IC) of laminate film affixed to adherend before humidity resistance testing | 6.6 | 93.2 |
| | | Gloss G(A) of laminate film affixed to adherend after humidity resistance testing | 6.7 | 96.2 |
| | | G(IC)/G(IL) × 100 | 101.5 | 101.0 |
| | | G(A)/G(IC) × 100 | 101.5 | 103.2 |
| | | Optical property | A | A |
| | | Damp heat resistance | A | A |

[Table 3]

| | | | Example 11 | Example 12 | Example 13 | Example 14 |
|---|---|---|---|---|---|---|
| | Protective film | Type | Matte | Matte | Matte | Gloss |
| | | Surface roughness Rap | 0.57 | 0.57 | 0.57 | 0.01 |
| | | Surface free energy γap | 41.3 | 41.3 | 41.3 | 47.2 |
| | | Coating material curing type | Thermoset | Thermoset | Thermoset | Thermoset |

(continued)

| | | | | Example 11 | Example 12 | Example 13 | Example 14 |
|---|---|---|---|---|---|---|---|
| Processing conditions | Clear layer | Main in-gredient (parts by mass) | Acrylic resin | 50.0 | 50.0 | 50.0 | 50.0 |
| | | | Polycarbonate polyol | 20.0 | 20.0 | 20.0 | 20.0 |
| | | | Polycaprolactone polyol | 10.0 | 10.0 | 10.0 | 10.0 |
| | | Other (parts by mass) | UVA 1 | 1.0 | 1.0 | 1.0 | 1.0 |
| | | | UVA 2 | 1.0 | 1.0 | 1.0 | 1.0 |
| | | | HALS | 1.0 | 1.0 | 1.0 | 1.0 |
| | | | Additive 1 | 10.0 | 10.0 | 10.0 | 10.0 |
| | | | Additive 2 | 7.0 | 7.0 | 7.0 | 7.0 |
| | | Curing agent (parts by mass) | | 40.0 | 40.0 | 40.0 | 40.0 |
| | | Dry film thickness ($\mu$m) | | 30 | 30 | 30 | 30 |
| | | Drying conditions | | 120°C × 2.5 min | 120°C × 2.5 min | 120°C × 2.5 min | 120°C × 2.5 min |
| | Design layer | Polyacrylic polyol | | 90 | 99.9 | 60 | 90 |
| | | Pigment | | 10 | 0.1 | 40 | 10 |
| | | Curing agent | | 10 | 10 | 10 | 10 |
| | | Dry film thickness ($\mu$m) | | 20 | 20 | 20 | 20 |
| | | Drying conditions | | 100°C × 5 min | 100°C × 5 min | 100°C × 5 min | 100°C × 5 min |
| Physical properties of la-minate film | | Surface roughness Rac | | 0.67 | 0.65 | 0.68 | 0.02 |
| | | Surface roughness Rap | | 0.57 | 0.59 | 0.6 | 0.01 |
| | | Surface free energy $\gamma$ac | | 27.9 | 26.5 | 27.5 | 45.8 |
| | | Surface free energy $\gamma$ap | | 41.3 | 40.2 | 43.5 | 47.5 |
| | | Gloss G(IL) of laminate film by itself | | 6.5 | 6.7 | 6.5 | 93.1 |
| | | Rac/Rap × 100 | | 117.5 | 110.2 | 113.3 | 200.0 |
| | | $\gamma$ac/$\gamma$ap × 100 | | 67.6 | 65.9 | 63.2 | 96.4 |
| | | HM(L) | | 6.5 | 5.4 | 7.5 | 6.1 |
| | | Post-reaction Tg | | 67.5 | 65.4 | 65.5 | 73.5 |
| | | Extensibility | | 75 | 85 | 60 | 75 |
| | | Transferability | | Good | Good | Good | Good |

(continued)

|  |  | Example 11 | Example 12 | Example 13 | Example 14 |
|---|---|---|---|---|---|
| Physical properties of composite (laminate film + adherend) | Gloss G(IC) of laminate film affixed to adherend before humidity resistance testing | 6.7 | 6.6 | 6.3 | 93.7 |
|  | Gloss G(A) of laminate film affixed to adherend after humidity resistance testing | 6.6 | 6.4 | 6.5 | 92.5 |
|  | G(IC)/G(IL) × 100 | 103.1 | 98.5 | 96.9 | 100.6 |
|  | G(A)/G(IC) × 100 | 98.5 | 97.0 | 103.2 | 98.7 |
|  | Optical property | A | A | A | A |
|  | Damp heat resistance | A | A | A | A |

[Table 4]

|  |  |  |  | Example 11 | Example 12 |
|---|---|---|---|---|---|
| Processing conditions | Protective film | Type | | Matte | Gloss |
|  |  | Surface roughness Rap | | 0.57 | 0.01 |
|  |  | Surface free energy yap | | 41.3 | 47.2 |
|  | Clear layer | Coating material curing type | | Thermoset | Thermoset |
|  |  | Main ingredient (parts by mass) | Acrylic resin | 50.0 | 50.0 |
|  |  |  | Polycarbonate polyol | 20.0 | 20.0 |
|  |  |  | Polycaprolactone polyol | 10.0 | 10.0 |
|  |  | Other (parts by mass) | UVA 1 | 1.0 | 1.0 |
|  |  |  | UVA 2 | 1.0 | 1.0 |
|  |  |  | HALS | 1.0 | 1.0 |
|  |  |  | Additive 1 | 10.0 | 10.0 |
|  |  |  | Additive 2 | 7.0 | 7.0 |
|  |  | Curing agent (parts by mass) | | 40.0 | 40.0 |
|  |  | Dry film thickness (μm) | | 30 | 30 |
|  |  | Drying conditions | | 120°C × 2.5 min | 120°C × 2.5 min |
|  | Design layer | Polyacrylic polyol | | 90 | 90 |
|  |  | Pigment | | 10 | 10 |
|  |  | Curing agent | | 10 | 10 |
|  |  | Dry film thickness (μm) | | 20 | 20 |
|  |  | Drying conditions | | 100°C × 5 min | 100°C × 5 min |
| Physical properties of laminate film | | Surface roughness Rac | | 0.67 | 0.02 |
|  |  | Surface roughness Rap | | 0.57 | 0.01 |
|  |  | Surface free energy γac | | 27.9 | 45.8 |
|  |  | Surface free energy γap | | 41.3 | 47.5 |
|  |  | Gloss G(IL) of laminate film by itself | | 6.5 | 93.1 |

(continued)

|  |  | Example 11 | Example 12 |
|---|---|---|---|
|  | Rac/Rap × 100 | 117.5 | 200.0 |
|  | $\gamma$ac/$\gamma$ap × 100 | 67.6 | 96.4 |
|  | HM(L) | 6.5 | 6.1 |
|  | Post-reaction Tg | 67.5 | 73.5 |
|  | Extensibility | 75 | 75 |
|  | Transferability | Good | Good |
| Physical properties of composite (laminate film + adherend) | Gloss G(IC) of laminate film affixed to adherend before humidity resistance testing | 6.7 | 93.7 |
|  | Gloss G(A) of laminate film affixed to adherend after humidity resistance testing | 6.6 | 92.5 |
|  | G(IC)/G(IL) × 100 | 103.1 | 100.6 |
|  | G(A)/G(IC) × 100 | 98.5 | 98.7 |
|  | Optical property | A | A |
|  | Damp heat resistance | A | A |

[Table 5]

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Protective film | | Type | Matte | Matte | Matte | Matte | Matte | Gloss | Matte |
| | | Surface roughness Rap | 0.58 | 0.58 | 0.57 | 0.57 | 0.63 | 0.02 | 0.58 |
| | | Surface free energy $\gamma$ap | 45.4 | 39.0 | 41.3 | 38.9 | 42.2 | 48.6 | 41.2 |
| Coating layer 1 | | Coating material curing type | Thermoset | Thermoset | Thermoset | Thermoset | Thermoset | Thermoset | Thermoset |
| | Main ingredient (parts by mass) | Acrylic resin | 50.0 | 50.0 | 50.0 | 50.0 | 50.0 | 50.0 | 80.0 |
| | | Polycarbonate polyol | 20.0 | 20.0 | 20.0 | 20.0 | 20.0 | 20.0 | 0.0 |
| | | Polycaprolactone polyol | 10.0 | 10.0 | 10.0 | 10.0 | 10.0 | 10.0 | 0.0 |
| | Other (parts by mass) | UVA 1 | 1.0 | 1.0 | 1.0 | 1.0 | 1.0 | 1.0 | 1.0 |
| | | UVA 2 | 1.0 | 1.0 | 1.0 | 1.0 | 1.0 | 1.0 | 1.0 |
| | | HALS | 1.0 | 1.0 | 1.0 | 1.0 | 1.0 | 1.0 | 1.0 |
| | | Additive 1 | 10.0 | 10.0 | 10.0 | 10.0 | 10.0 | 10.0 | 10.0 |
| | | Additive 2 | 7.0 | 7.0 | 7.0 | 7.0 | 7.0 | 7.0 | 7.0 |
| | Curing agent (parts by mass) | | 40.0 | 0.0 | 20.0 | 400.0 | 10.0 | 10.0 | 80.0 |
| | Dry film thickness (μm) | | 30 | 30 | 30 | 30 | 30 | 30 | 30.0 |
| Processing conditions | Drying conditions | | 140°C × 2.5 min | 120°C × 2.5 min | 120°C × 2.5 min | 120°C × 2.5 min | 120°C × 2.5 min | 120°C × 2.5 min | 140°C × 2.5 min |
| Physical properties of laminate film | | Surface roughness Rac | 0.10 | 1.24 | 0.67 | 0.75 | 0.59 | 0.02 | 0.8 |
| | | Surface roughness Rap | 0.58 | 0.58 | 0.57 | 0.57 | 0.63 | 0.02 | 0.6 |
| | | Surface free energy $\gamma$ac | 32.5 | 53.4 | 27.9 | 21.2 | 42.4 | 31.1 | 41.2 |
| | | Surface free energy $\gamma$ap | 45.4 | 39.0 | 41.3 | 44.3 | 42.2 | 48.6 | 40.5 |
| | | Gloss G(IL) of laminate film by itself | - | - | 6.5 | 7.2 | 6.7 | 92.8 | 6.8 |
| | | Rac/Rap × 100 | 17.2 | 213.8 | 116.8 | 131.6 | 93.6 | 100.0 | 140.4 |

(continued)

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| | $\gamma ac/\gamma ap \times 100$ | 71.6 | 136.9 | 67.6 | 47.9 | 100.5 | 64.0 | 101.7 |
| | HM(L) | 11.2 | - | 6.5 | 67.0 | 1.4 | 1.0 | 55.2 |
| | Post-reaction Tg | 75.6 | -25.6 | 72.4 | 93.0 | 76.5 | 75.6 | 125.6 |
| | Extensibility | 85 | 320 | 130 | 40 | 70 | 140 | 40 |
| | Transferability | Poor | Poor | Good | Good | Good | Good | Good |
| Physical properties of composite (laminate film + adherend) | Gloss G(IC) of laminate film affixed to adherend before humidity resistance testing | - | - | 4.6 | 5.6 | 7.5 | 75.2 | 6.3 |
| | Gloss G(A) of laminate film affixed to adherend after humidity resistance testing | - | - | 5.2 | 15.6 | 14.8 | 45.0 | Cracking |
| | G(IC)/G(IL) $\times$ 100 | - | - | 70.8 | 77.8 | 111.9 | 81.0 | 92.6 |
| | G(A)/G(IC) $\times$ 100 | - | - | 113.0 | 278.6 | 197.3 | 59.8 | - |
| | Optical property | - | - | D | D | C | C | B |
| | Damp heat resistance | - | - | C | D | D | C | D |

In some cases, items that could not be measured because transfer was not possible are indicated.

Measurement method of arithmetic average roughness (Ra)

A test sample was cut out as 50 mm × 50 mm, and a value for arithmetic average roughness (Ra) of each subject was measured in accordance with JIS B0601;2001 using a laser microscope (VK8700 produced by Keyence Corporation) having an eyepiece magnification of ×20 and an objective lens magnification of ×50.

The arithmetic average roughness (Rac) at a protective film-side of the coating layer of a laminate film L from which the protective film had been peeled at a rate of 5.0 mm/s and the arithmetic average roughness (Rap) of a surface at the laminate film L-side of the protective film were each measured, and the value of (Rac/Rap) × 100 was calculated.

Calculation method of surface free energy

A test sample was cut out as 50 mm × 50 mm. With respect to each of a surface at a protective film-side of a laminate film from which the protective film had been peeled at a rate of 5.0 mm/s and a surface at the laminate film-side of the peeled-off protective film, an automatic contact angle meter (Dmo-701 produced by Kyowa Interface Science Co., Ltd.) was used to measure the contact angles of DIW (deionized water) and methylene iodide under conditions of a droplet size of 1 μL and a timing of 1 second after droplet dripping in an environment of not lower than 20°C and not higher than 23°C. The surface free energy of each surface was then calculated from the Owens and Wendt equation.

The surface free energy γac at the protective film-side of the laminate film from which the protective film had been peeled at a rate of 5.0 mm/s was determined. The surface free energy γap at the laminate film-side of the protective film that had been peeled off at a rate of 5.0 mm/s was also determined by the same procedure. The determined surface free energy values were used to calculate γac/γap × 100.

Measurement method of Martens hardness

A test sample was cut out as 50 mm × 50 mm and was affixed onto a glass sheet. Thereafter, an HM2000 micro hardness tester produced by Fischer Instruments K.K. was used to measure the Martens hardness HM(L) of the laminate film from the indentation depth at maximum load under conditions of a Vickers diamond indenter, a loading rate of 5 mmN/20 s, and a creep of 5 s.

Measurement method of 60° gloss

A test sample was cut out as 100 mm × 50 mm, a black PET film (produced by PANAC Co., Ltd.; product name: GELPOLY GPH100E82A04) was affixed to a surface at the opposite side of the adhesive layer of the laminate film relative to the resin substrate, and the 60° gloss (G(IL)) was measured by a gloss meter (micro-Tri-gloss BYK).

For the 60° gloss (G(IC)) of the surface of a laminate film L of a composite resulting from affixing to an adherend, a 1 mm polycarbonate sheet was affixed to a surface at the opposite side of the adhesive layer of the laminate film relative to the resin substrate to obtain a composite. A black PET film was affixed to the surface at the opposite side of the polycarbonate sheet of the composite relative to the surface where the laminate film was affixed, and the 60° gloss (G(IC)) of the composite was measured by a gloss meter. In addition, the composite was set in a constant temperature and humidity chamber produced by ESPEC without coming into contact with a wall surface or the like and was treated for 1500 hours under conditions of a humidity of 85% and a temperature of 85°C. The 60° gloss G(A) of the surface of the laminate film L after this treatment was also measured in the same manner.

The determined 60° gloss values were used to calculate the values of G(IC)/G(IL) × 100 and G(A)/G(IC) × 100.

Measurement method of glass-transition temperature

A cured film at the surface at the protective film-side of a laminate film from which the protective film had been peeled at a rate of 5.0 mm/s was scraped off using a scalpel to obtain a test sample. The glass-transition temperature was taken to be a value measured by the following steps using a differential scanning calorimeter (DSC) (Thermal Analyzer SSC5200 produced by Seiko Instruments Inc.). Specifically, in a step of heating from -40°C to 200°C at a heating rate of 5°C/min (step 1), a step of cooling from 200°C to -40°C at a cooling rate of 5°C/min (step 2), and a step of heating from -40°C to 200°C at a heating rate of 5°C/min (step 3), a value obtained from a chart during heating in step 3 was taken to be the glass-transition temperature.

Measurement method of extensibility

A laminate film L is cut to 10 mm × 70 mm, and then 10 mm at each end of the laminate film L is fixed by a chucking part of a Precision Universal Testing Machine (AUTOGRAPH produced by Shimadzu Corporation). After fixing, the film is pulled at a rate of 200 mm/min in a 23°C environment, and the length L(A) of the film at which cracking of the coating layer occurs during this pulling is measured.

The length of the film prior to testing was taken to be L(B), and the extensibility was calculated by the following formula. Note that for both L(A) and L(B), the sections that are fixed by chucking are not included in the length.

$$\text{Extensibility } (\%) = (L(A) - L(B))/L(B) \times 100$$

Evaluation method of transferability

The protective film was peeled from the laminate film, and the external appearance of the surface of the laminate film was visually checked. An evaluation of whether unevenness of the protective film had been transferred to the coating layer was made by the following two grades.

Good: Good transfer
Poor: Poor transfer

Evaluation method of optical property

An evaluation as to whether an arbitrary optical property was obtained when a laminate film L was affixed to an adherend was made by the following four grades based on the change between gloss G(IL) before affixing to the adherend and gloss G(IC) of the laminate film affixed to the adherend.

$$\left| G(IC) - G(IL) \right| /G(IC) \times 100(\%)$$

A: Change of less than 5%
B: Change of not less than 5% and less than 10%
C: Change of not less than 10% and less than 20%
D: Change of 20% or more

Evaluation method of damp heat resistance

A laminate film L was cut to a size of 100 mm × 50 mm, was affixed to an adherend, and was exposed to conditions of a temperature of 85°C and a humidity of 85% for 1500 hours. An evaluation was made by the following four grades based on the change of 60° gloss between before and after damp heat testing.

The change was calculated by the following formula.

$$\left| G(A) - G(IC) \right| /G(IC) \times 100(\%)$$

A: Change of less than 5%
B: Change of not less than 5% and less than 10%
C: Change of not less than 10% and less than 50%
D: Change of 50% or more or occurrence of external appearance defect such as cracking

INDUSTRIAL APPLICABILITY

According to the present disclosure, the object is to provide a laminate film that provides an optical property according to needs regardless of luster and surface roughness of an adherend and that has excellent durability even under severe conditions with regard to humidity resistance of the adherend.

REFERENCE SIGNS LIST

1: Laminate film
2: Laminate film L
3: Composite
4: Laminate film
5: Laminate film
10: Protective film
20: Coating layer
30: Resin substrate
40: Adhesive layer
50: Adherend
60: Clear layer
70: Design layer

**Claims**

1. A laminate film comprising, in order, a protective film, a coating layer, a resin substrate, and an adhesive layer, wherein

   the protective film and the coating layer are adjacent to each other,
   when a laminate film not including the protective film that results from peeling of the protective film from the laminate film at a rate of 5.0 mm/s is taken to be a laminate film L, surface roughness Rac of a surface at an opposite side of the coating layer of the laminate film L relative to the resin substrate and surface roughness Rap at a coating layer-side of the protective film that has been peeled off satisfy equation 1:

   $$50.0 \leq (Rac/Rap) \times 100 \leq 210.0 \cdots \text{equation 1}$$

   surface free energy γac of the surface at the opposite side of the coating layer of the laminate film L relative to the resin substrate and surface free energy γap at the coating layer-side of the protective film that has been peeled off satisfy equation 2:

   $$50.0 \leq (\gamma ac/\gamma ap) \times 100 \leq 110.0 \cdots \text{equation 2}$$

   60° gloss G(IL) of the laminate film L and 60° gloss G(IC) of the laminate film L in a composite of the laminate film L and an adherend resulting from affixing of the laminate film L to the adherend satisfy equation 3:

   $$85.0 \leq (G(IC)/G(IL)) \times 100 \leq 110.0 \cdots \text{equation 3}$$

   Martens hardness of the coating layer of the laminate film L satisfies equation 4:

   $$2 \text{ N/mm2} \leq HM(L) \leq 50 \text{ N/mm2} \cdots \text{equation 4}$$

   and 60° gloss G(A) of the laminate film L in the composite after damp heat testing at a humidity of 85% and a temperature of 85°C and the 60° gloss G(IC) of the laminate film L in the composite before damp heat testing at a humidity of 85% and a temperature of 85°C satisfy equation 5:

   $$70.0 \leq (G(A)/G(IC)) \times 100 \leq 120.0 \cdots \text{equation 5}.$$

2. The laminate film according to claim 1, wherein the coating layer is formed of one or more layers, and the laminate film has a stacking order of protective film/clear layer/design layer/resin substrate/adhesive layer.

3. The laminate film according to claim 1 or 2, wherein the laminate film has a configuration including a design layer between the resin substrate and the adhesive layer and has a stacking order of protective film/coating layer/resin substrate/design layer/adhesive layer.

4. The laminate film according to any one of claims 1 to 3, wherein Tg of the coating layer in the laminate film L after curing is 25.0°C to 120.0°C.

5. The laminate film according to any one of claims 1 to 4, wherein the laminate film L has an extensibility of 50% to 300%.

6. The laminate film according to any one of claims 1 to 5, wherein the coating layer is formed of one or more selected from the group consisting of an acrylic resin, a polycarbonate polyol, a fluororesin, and a silicone resin.

7. An article comprising:

   an adherend; and
   a laminate film L resulting from peeling of the protective film from the laminate film according to any one of claims 1 to 6, wherein
   the adhesive layer of the laminate film L is in contact with the adherend.

FIG. 1

1

10

20

30

40

FIG. 2

2

20

30

40

FIG. 3

3

2 {

20

30

40

50

# FIG. 4

# FIG. 5

## INTERNATIONAL SEARCH REPORT

| International application No. |
| --- |
| **PCT/JP2023/030213** |

**A.    CLASSIFICATION OF SUBJECT MATTER**

**B32B 27/00**(2006.01)i; **B32B 7/06**(2019.01)i
FI:   B32B27/00 M; B32B7/06

According to International Patent Classification (IPC) or to both national classification and IPC

**B.    FIELDS SEARCHED**

Minimum documentation searched (classification system followed by classification symbols)

B32B1/00-43/00; C09J7/00-7/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2019-519410 A (TESA SE) 11 July 2019 (2019-07-11) claims, paragraphs [0055]-[0056], [0073]-[0074], [0084]-[0086], [0097] | 1-7 |
| A | JP 2016-193494 A (DAINIPPON PRINTING CO LTD) 17 November 2016 (2016-11-17) claims, paragraphs [0009], [0021]-[0022], [0032]-[0034], [0065]-[0068], [0105]-[0109], [0113]-[0115] | 1-7 |
| A | WO 2019/078369 A1 (TEIJIN FILM SOLUTIONS LIMITED) 25 April 2019 (2019-04-25) claims, paragraphs [0009], [0017], [0041]-[0045] | 1-7 |
| A | JP 2019-25739 A (TORAY INDUSTRIES) 21 February 2019 (2019-02-21) claims, paragraphs [0002]-[0003], [0057] | 1-7 |
| A | JP 2018-34488 A (BANDO CHEMICAL IND) 08 March 2018 (2018-03-08) claims, paragraphs [0049], [0059], [0067]-[0078] | 1-7 |
| P, A | JP 2023-80848 A (3M INNOVATIVE PROPERTIES CO) 09 June 2023 (2023-06-09) claims, paragraphs [0044], [0053]-[0058], [0078]-[0091] | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 October 2023** | **07 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/030213**

| Patent document cited in search report | | | Publication date (day/month/year) | Patent family member(s) | | | Publication date (day/month/year) |
|---|---|---|---|---|---|---|---|
| JP | 2019-519410 | A | 11 July 2019 | US | 2019/0308398 | A1 | |
| | | | | claims, paragraphs [0055]-[0056], [0074]-[0075], [0085]-[0087], [0099] | | | |
| | | | | WO | 2018/007002 | A1 | |
| | | | | EP | 3478784 | A1 | |
| | | | | DE | 102016212106 | A1 | |
| | | | | CN | 109415605 | A | |
| | | | | KR | 10-2019-0025015 | A | |
| JP | 2016-193494 | A | 17 November 2016 | (Family: none) | | | |
| WO | 2019/078369 | A1 | 25 April 2019 | US | 2021/0187868 | A1 | |
| | | | | claims, paragraphs [0009], [0040], [0074]-[0080] | | | |
| | | | | EP | 3698963 | A1 | |
| | | | | CN | 111246998 | A | |
| JP | 2019-25739 | A | 21 February 2019 | (Family: none) | | | |
| JP | 2018-34488 | A | 08 March 2018 | (Family: none) | | | |
| JP | 2023-80848 | A | 09 June 2023 | WO | 2023/100076 | A1 | |
| | | | | claims, p. 10, lines 16-22, p. 12, lines 1-29, p. 17, line 6 to p. 19, line 23 | | | |

Form PCT/ISA/210 (patent family annex) (January 2015)

35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018053193 A
- JP 5426159 B
- WO 2016010041 A1
- WO 2017047600 A1
- JP 2016221473 A